# EUROPÄISCHE PATENTANMELDUNG

(11) **EP 4 763 635 A1**
(43) Veröffentlichungstag der Anmeldung: **24.06.2026**
(21) Anmeldenummer: 25216821.6
(22) Anmeldetag: 19.11.2025
(51) Int. Cl.: B60T 7/20, B60T 8/17, B60T 13/66, B60T 13/68

(54) **VERFAHREN ZUM BEREITSTELLEN EINER FESTSTELLBREMSFUNKTION**

(30) Priorität: 17.12.2024 DE 102024138373
(71) Anmelder: ZF CV Systems Global GmbH, 3006 Bern (CH)
(72) Erfinder: VAN THIEL, Julian, 30938 Grossburgwedel (DE)
(74) Vertreter: Rabe, Dirk-Heinrich

(57) **Zusammenfassung**

Die Erfindung betrifft ein Verfahren (100) zum Bereitstellen einer Feststellbremsfunktion mittels eines elektropneumatischen Feststellbremsmoduls (1), das Verfahren aufweisend die Schritte: Bereitstellen (S1) einer Konfigurationsanforderung (51) und Auswählen (S2) einer Konfiguration des elektropneumatischen Feststellbremsmoduls (1) aus einer ersten Konfiguration (43) und einer zweiten Konfiguration (45) durch eine elektronische Steuereinheit (ECU) des Feststellbremsmoduls (1) basierend auf einer Konfigurationsanforderung (51). In der ersten Konfiguration (43) wird an einem Anhängersteuerventilanschluss (7) ein Anhängersteuerdruck (pA) ausgesteuert. In der zweiten Konfiguration (45) wird am Anhängersteuerventilanschluss (7) ein Vorratsdruck (pV) bereitgestellt. Die Erfindung betrifft ferner ein elektropneumatisches Feststellbremsmodul (1) und ein elektropneumatisches Bremssystem (302).

## Beschreibung

Die Erfindung betrifft ein Verfahren zum Bereitstellen einer Feststellbremsfunktion für einen Fahrzeugzug mit einem Zugfahrzeug und einem Anhängerwagen mittels eines elektropneumatischen Feststellbremsmoduls, das einen Vorratsanschluss, einen Feststellbremsanschluss, einen Anhängersteuerventilanschluss, eine elektropneumatische Ventileinheit und eine elektronische Steuereinheit zum Steuern der elektropneumatischen Ventileinheit aufweist.

Fahrzeugzüge mit einem Zugfahrzeug und einem Anhängerwagen sind üblicherweise Nutzfahrzeuge, die für den Transport von Gütern oder Waren vorgesehen sind. Beim Abstellen eines solchen Fahrzeugzugs muss sichergestellt werden, das der Fahrzeugzug nicht unbeabsichtigt bewegt wird bzw. sich nicht unbeabsichtigt bewegt. Die Feststellbremsen des Zugfahrzeugs und/oder des Anhängerwagens können ein unbeabsichtigte Bewegungen des Fahrzeugzugs verhindern. Die Feststellbremsen sind meist als Federspeicherbremsen eines pneumatischen Bremssystems ausgebildet. Federspeicherbremsen weisen einen federbelasteten Bremsaktuator auf, der drucklos die Bremse zuspannt. Im drucklosen Zustand ist das Fahrzeug (Zugfahrzeug und/oder Anhängerwagen) also entsprechend gebremst. Zum Lösen werden die Federspeicherbremsen mit Druckluft beaufschlagt, sodass diese gegen die Kraft der Feder gelöst werden. Das Belüften und Entlüften des Federspeicherteils erfolgt mittels des Feststellbremsmoduls.

Das Zugfahrzeug ist zum Ankoppeln und Ziehen des Anhängerwagens ausgebildet. Meist sind Feststellbremsen nur am Zugfahrzeug, nicht aber am Anhängerwagen vorgesehen. Das Feststellbremsmodul des Zugfahrzeugs ist dabei in der Regel auch zur Ansteuerung einer Anhängerbremse des Anhängerwagens ausgebildet. Die Ansteuerung erfolgt dabei meist über ein Anhängersteuerventil mit einer invertierenden Steuercharakteristik. Wenn ein Steuereingang des Anhängersteuerventils belüftet wird, werden Anhängerbremszylinder der Anhängerbremse entlüftet und somit gelöst. Zum Feststellen des Anhängers mittels der Anhängerbremse wird der Steuereingang des Anhängersteuerventils entlüftet. Das Anhängersteuerventil stellt dann einen positiven Druck an den Anhängerbremszylinder bereit und betätigt so die Anhängerbremse.

In Westeuropa bzw. Mitteleuropa wird zum Abstellen eines Fahrzeugzugs mit dem Zugfahrzeug und dem Anhängerwagen sowohl die Feststellbremse des Zugfahrzeugs als auch die Anhängerbremse betätigt und betätigt gehalten. Dies wird mittels eines Feststellbremsmoduls erreicht, welches auch spannungslos (bzw. stromlos) sowohl einen zum Federspeicherteil des Federspeicherbremszylinders des Zugfahrzeugs führenden Feststellbremsanschluss als auch einen zum Steuereingang des Anhängersteuerventils führenden Anhängersteuerventilanschluss entlüftet hält. Ein derartiges Feststellbremsmodul ist beispielsweise aus DE 103 36 611 A1 bekannt.

In anderen Ländern, insbesondere in Skandinavien, wird demgegenüber ein Abstellen des Fahrzeugzugs mit ungebremstem Anhänger gefordert. Dies wird nachfolgend auch als skandinavisches Parken oder skandinavische Konfiguration bezeichnet. Hierdurch soll verhindert werden, dass die Bremsen des Fahrzeugzugs bei geringen Temperaturen festfrieren. Für das skandinavische Parken ausgebildete Feststellbremsmodule halten den Anhängersteuerventilanschluss in der Regel belüftet.

Aus DE 10 2007 008 504 A1 ist ein weiteres Feststellbremsmodul bekannt, das sowohl für den Einsatz in Westeuropa als auch für den Einsatz in Skandinavien geeignet ist. Dieses Feststellbremsmodul weist hierfür zwei alternative Anhängersteuerventilanschlüsse auf, die jeweils mechanisch mit dem Anhängersteuerventil verbindbar sind, um das jeweils gewünschte Verhalten der Anhängerbremse beim Abstellen des Fahrzeugs zu erhalten. Der jeweils andere Anhängersteuerventilanschluss wird nicht genutzt und muss verstopft bzw. mechanisch verschlossen werden. Ein Umrüsten des Feststellbremsmoduls von der westeuropäischen Konfiguration auf die skandinavische Konfiguration erfordert bei diesem Feststellbremsmodul manuell durchzuführende konstruktive bzw. mechanische Änderungen an der Bremsanlage. Ein einfaches Umschalten der westeuropäischen Konfiguration und der skandinavischen Konfiguration ist nicht möglich.

Der Erfindung liegt die Aufgabe zugrunde, ein Verfahren anzugeben, das ein sicheres Bereitstellen einer Feststellbremsfunktion für einen Fahrzeugzug erlaubt, insbesondere auch nach einer Fertigung und/oder im Betrieb.

Die Erfindung löst die Aufgabe mit einem Verfahren zum Bereitstellen einer Feststellbremsfunktion nach Anspruch 1, einem elektropneumatischen Feststellbremsmodul nach Anspruch 14 und einem elektropneumatischen Bremssystem nach Anspruch 15.

In einem ersten Aspekt löst die Erfindung die Aufgabe mit einem Verfahren zum Bereitstellen einer Feststellbremsfunktion für einen Fahrzeugzug mit einem Zugfahrzeug und einem Anhängerwagen mittels eines elektropneumatischen Feststellbremsmoduls, das einen Vorratsanschluss zum Empfangen von Vorratsdruck, einen Feststellbremsanschluss, einen Anhängersteuerventilanschluss, eine elektropneumatische Ventileinheit und eine elektronische Steuereinheit zum Steuern der elektropneumatischen Ventileinheit aufweist, wobei das elektropneumatische Feststellbremsmodul durch Schalten der elektropneumatischen Ventileinheit zwischen einer ersten Konfiguration, in dem bei Vorliegen einer Feststellbremsanforderung am Feststellbremsanschluss ein Feststellbremsdruck und am Anhängersteuerventilanschluss einen zum Feststelldruck im Wesentlichen identischen Anhängersteuerdruck ausgesteuert wird, und einer zweiten Konfiguration, in dem bei Vorliegen einer Feststellbremsanforderung am Feststellbremsanschluss ein Feststellbremsdruck ausgesteuert und am Anhängersteuerventilanschluss der Vorratsdruck bereitgestellt wird, bistabil umschaltbar ist. Das Verfahren umfasst die Schritte: Bereitstellen einer Konfigurationsanforderung; und Auswählen einer Konfiguration des elektropneumatischen Feststellbremsmoduls aus der ersten Konfiguration und der zweiten Konfiguration durch die elektronische Steuereinheit des Feststellbremsmoduls basierend auf der Konfigurationsanforderung.

Das elektropneumatische Feststellbremsmodul umfasst eine elektropneumatische Ventileinheit. Diese wird durch eine elektronische Steuereinheit, auch ECU genannt, gesteuert. Am Vorratsanschluss empfangener Vorratsdruck wird in Abhängigkeit der Ansteuerung von der elektrodramatischen Ventileinheit verarbeitet. Der verarbeitete Druck wird dann am Feststellbremsanschluss und/oder am Anhängersteuerventilanschluss ausgesteuert, wobei am Feststellbremsanschluss und am Anhängersteuerventilanschluss auch voneinander verschiedene Drücke ausgesteuert werden können. Es soll verstanden werden, dass das Druckniveau beim Verarbeiten in der elektropneumatischen Ventileinheit nicht geändert werden muss aber geändert werden kann.

In der ersten Konfiguration der elektropneumatischen Ventileinheit wird dann, wenn eine Feststellbremsanforderung vorliegt, am Anhängersteuerventil ein Anhängersteuerdruck ausgesteuert der im Wesentlichen dem Feststellbremsdruck entspricht. Es soll verstanden werden, dass der Feststellbremsdruck nicht zwingend ein Druckniveau haben muss, das über dem Druckniveau der Umgebung liegt. Vielmehr kann der Feststellbremsdruck in vielen Fällen in etwa dem Umgebungsdruck entsprechen.

Wenn der Feststellbremsdruck im Wesentlichen das Druckniveau der Umgebung hat, dann liegt dieses Druckniveau in der ersten Konfiguration auch am Anhängersteuerventilanschluss vor. In der zweiten Konfiguration der elektromagnetischen Ventileinheit wird dann, wenn eine Feststellbremsanforderung vorliegt, das Anhängersteuerventil mit Vorratsdruck versorgt.

Die Feststellbremsanforderung kann pneumatisch am Feststellbremsmodul bereitgestellt werden. Vorzugsweise wird die Feststellbremsanforderung jedoch elektronisch an der elektronischen Steuereinheit bereitgestellt.

Das elektropneumatische Feststellbremsmodul ist zwischen der ersten Konfiguration und der zweiten Konfiguration bistabil umschaltbar. Nach einem Umschalten kann das elektropneumatische Feststellbremsmodul stabil in der ersten Konfiguration bzw. der zweiten Konfiguration verbleiben, insbesondere auch dann, wenn das elektropneumatische Feststellbremsmodul und/oder die elektronische Steuereinheit stromlos sind. Die elektronische Steuereinheit steuert die elektropneumatische Ventileinheit derart an, dass zwischen der stabilen ersten Konfiguration und der stabilen zweiten Konfiguration umgeschaltet werden kann.

Das erfindungsgemäße Verfahren umfasst das Bereitstellen einer Konfigurationsanforderung. Vorzugsweise ist die Konfigurationsanforderung eine elektronische Konfigurationsanforderung, die an der elektronischen Steuereinheit des elektropneumatischen Feststellbremsmoduls bereitgestellt wird. Vorzugsweise kann die Konfigurationsanforderung über eine Signalleitung an der elektronischen Steuereinheit bereitgestellt werden. Es kann aber auch vorgesehen sein, dass die elektronische Steuereinheit zum Generieren einer Konfigurationsanforderung ausgebildet ist und/oder dass eine zweite Steuereinheit des Feststellbremsmoduls die Konfigurationsanforderung bereitstellt.

Das Verfahren umfasst ferner ein Auswählen einer Konfiguration des elektropneumatischen Feststellbremsmoduls aus der ersten Konfiguration und der zweiten Konfiguration durch die elektronische Steuereinheit des Feststellbremsmoduls basierend auf der Konfigurationsanforderung. Das Auswählen einer Konfiguration des elektropneumatischen Feststellbremsmoduls umfasst ein Schalten des elektropneumatischen Feststellbremsmoduls in die ausgewählte Konfiguration, falls das elektropneumatische Feststellbremsmodul noch nicht in der ausgewählten Konfiguration ist. Falls das elektrogrammatische Feststellbremsmodul bereits in die ausgewählte Konfiguration geschaltet ist, umfasst das Auswählen einer Konfiguration ein Beibehalten der ausgewählten Konfiguration. Unabhängig von der Ausgangskonfiguration ist das elektropneumatische Feststellbremsmodul also nach dem Auswahlschritt in der ausgewählten Konfiguration.

Das erfindungsgemäße Verfahren ermöglicht eine einfache Anpassung der Konfiguration des elektropneumatischen Feststellbremsmoduls in Abhängigkeit der Konfigurationsanforderung. Die Konfiguration des elektropneumatischen Feststellbremsmoduls kann so einfach, schnell und/oder individuelle geändert werden. Beispielsweise kann durch das Bereitstellen einer Konfigurationsanforderung zwischen der westeuropäischen Konfiguration und der skandinavischen Konfiguration umgeschaltet werden. Insbesondere, wenn die Konfigurationsanforderung eine elektronische Konfigurationsanforderung ist, ist ein Umschalten auch im laufenden Betrieb des Fahrzeugs bzw. nach einer Auslieferung des Zugfahrzeugs möglich. Damit überwindet das erfindungsgemäße Verfahren das bestehende Problem, dass bei bekannten Zugfahrzeugen ein Wechsel zwischen der westeuropäischen Ansteuerung und der skandinavischen Ansteuerung nach dem sogenannten End-Of-Line (d.h. nach dem Ende der Fertigungslinie) nur noch mit großem Aufwand oder überhaupt nicht mehr möglich ist.

Gemäß einer ersten bevorzugten Ausführungsform umfasst die Konfigurationsanforderung eine statische Konfigurationsanforderung, die unabhängig von einem Fahrzeugzustand des Fahrzeugzugs und/oder unabhängig von Umgebungsbedingungen bereitgestellt wird, und/oder eine dynamische Konfigurationsanforderung, die in Abhängigkeit einer zumindest einen Parameter aufweisenden Parametrisierung, bereitgestellt wird.

Eine statische Konfigurationsanforderung wird fest vorgegeben. Beispielsweise und bevorzugt wird eine statische Konfigurationsanforderung durch einen Benutzer, insbesondere Fahrer, Besitzer, Halter oder dergleichen, des Fahrzeugzugs vorgegeben. Es kann aber auch vorgesehen sein, dass eine Hauptsteuereinheit des Zugfahrzeugs eine statische Konfigurationsanforderung bereitstellt. Alternativ oder ergänzend kann eine statische Konfigurationsanforderung auch durch fahrzeugexterne Quellen, beispielsweise über ein drahtloses Kommunikationsnetzwerk, insbesondere Mobilfunknetz, bereitgestellt werden.

Eine dynamische Konfigurationsanforderung wird vorzugsweise situationsabhängig bereitgestellt. Die Ausgestaltung der dynamischen Konfigurationsanforderung hängt dabei von der Parametrisierung ab. Beispielsweise kann die dynamische Konfigurationsanforderung die erste Konfiguration des elektropneumatischen Feststellbremsmoduls fordern, falls ein erster Parameter erfüllt ist, und die zweite Konfiguration des elektroproblematischen Feststellbremsmoduls fordern, wenn der erste Parameter nicht erfüllt ist. Die Parametrisierung gibt also ein zumindest ein Entscheidungskriterium dafür an, ob die dynamische Konfigurationsanforderung die erste Konfiguration oder die zweite Konfiguration des Feststellbremsmoduls fordert. Die dynamische Konfigurationsanforderung erlaubt so eine dynamische Anpassung der Konfiguration des elektropneumatischen Feststellbremsmoduls, insbesondere auch nach dem End-Of-Line. Es soll verstanden werden, dass die Konfigurationsanforderung sowohl eine statische als auch eine dynamische Konfigurationsanforderung umfassen kann.

Vorzugsweise hat bei Vorliegen einer statischen Konfigurationsanforderung und einer dynamischen Konfigurationsanforderung die statische Konfigurationsanforderung Vorrang vor der dynamischen Konfigurationsanforderung. Alternativ oder ergänzend wird die dynamische Konfigurationsanforderung nur bei Fehlen einer statischen Konfigurationsanforderung bereitgestellt. **In** dieser bevorzugten Ausgestaltung kann durch bereitstellen einer statischen Konfigurationsanforderung eine bestimmte Konfiguration des elektropneumatischen Feststellbremsmoduls fest vorgegeben werden. Beispielsweise kann ein Fahrer des Zugfahrzeugs oder eine Hauptsteuereinheit eine statische Konfigurationsanforderung bereitstellen und so die westeuropäische Ansteuerung der Anhängerbremsen fest vorgeben. Fehlt hingegen eine statische Konfigurationsanforderung, wird die Konfiguration des elektropneumatischen Feststellbremsmoduls unter Verwendung der dynamischen Konfigurationsanforderung dynamisch an die vorliegende Situation angepasst. Dies ermöglicht ein sicheres Bereitstellen der Feststellbremsfunktion beispielsweise auch dann, wenn kein expliziter Nutzerwunsch vorliegt.

In einer bevorzugten Ausgestaltung wird die dynamische Konfigurationsanforderung von einer Steuereinheit des Zugfahrzeugs bereitgestellt. Die dynamische Konfigurationsanforderung kann aber auch von der elektronischen Steuereinheit des Feststellbremsmoduls bereitgestellt werden. Vorzugsweise ist die Steuereinheit des Zugfahrzeugs eine Hauptsteuereinheit des Zugfahrzeugs. Die Steuereinheit des Zugfahrzeugs kann über eine Signalleitung, insbesondere einen Fahrzeugbus, mit der elektronischen Steuereinheit des elektropneumatischen Feststellbremsmoduls verbunden sein. Die Steuereinheit des Zugfahrzeugs kann die dynamische Konfigurationsanforderung generieren und/oder empfangen. Beispielsweise kann die Steuereinheit des Zugfahrzeugs mit einer drahtlosen Kommunikationseinheit verbunden sein, die eine von einer externen Quelle bereitgestellte Konfigurationsanforderung empfängt und an der Steuereinheit bereitstellt. Die Steuereinheit des Zugfahrzeugs kann dazu ausgebildet sein, die dynamisch Konfigurationsanforderung unter Verwendung von Benutzereingaben, Daten und/oder Sensorsignalen zu generieren.

Bevorzugt ist die Parametrisierung einstellbar. Eine einstellbare Parametrisierung kann verändert werden, beispielsweise und bevorzugt durch Hinzufügen und/oder Entfernen von Parametern, durch Verändern von Parameterschwellen, durch Gewichten von Parametern und/oder durch Priorisieren von Parametern. Das Einstellen der Parametrisierung kann vorzugsweise auch remote erfolgen. Alternativ oder ergänzend kann eine Parametrisierung fahrzeugextern eingestellt und die eingestellte Parametrisierung dann an das Fahrzeug, insbesondere Zugfahrzeug, übertragen werden.

In einer bevorzugten Weiterbildung ist die Parametrisierung durch Auswählen zumindest eines Parameters aus einer Mehrzahl vordefinierter Parameter einstellbar. Es kann vorgesehen sein, dass eine Mehrzahl vordefinierter Parameter vorgegeben ist, aus der zum Einstellen der Parametrisierung zumindest ein zu berücksichtigender Parameter ausgewählt werden kann. Beispielsweise kann ein Fahrer des Fahrzeugs, ein Fahrzeughalter oder eine Steuereinheit des Zugfahrzeugs die zu berücksichtigenden Parameter auswählen.

Vorzugsweise weist die Parametrisierung zumindest zwei Parameter auf, wobei die Parametrisierung durch Vornehmen einer Priorisierung der Parameter einstellbar ist. Eine Priorisierung kann beispielsweise derart erfolgen, dass die dynamische Konfigurationsanforderung nur in Abhängigkeit eines Parameters höherer Priorität vorgegeben wird, sofern dieser Parameter höhere Priorität erfüllt ist. Beispielsweise kann ein erster Parameter ein Temperaturparameter und ein zweiter Parameter ein Neigungsparameter sein, wobei der Temperaturparameter priorisiert wird. Die Parametrisierung kann dann beispielsweise und bevorzugt so eingestellt werden, dass die dynamische Konfigurationsanforderung immer in einer Auswahl der zweiten Konfiguration des elektropneumatischen Feststellbremsmoduls resultiert, wenn eine Umgebungstemperatur im Bereich des Fahrzeugzugs unterhalb einer vordefinierten Temperatur liegt und der Temperaturparameter somit erfüllt ist. Die Umgebungstemperatur kann insbesondere eine Momentantemperatur und/oder eine Tiefsttemperatur der Vorhersage für einen vorbestimmten Zeitraum (beispielsweise die nächsten 5 Tage) und/oder eine Tiefsttemperatur der Vorhersage für vorbekannte Standzeit sein. Beispielsweise kann der Temperaturparameter eine Temperaturschwelle von -10°C definieren. Sofern die aktuelle Umgebungstemperatur oder die zu erwartende Umgebungstemperatur diese Temperaturschwelle unterschreitet, ist der Temperaturparameter erfüllt und es wird eine dynamische Konfigurationsanforderung bereitgestellt, die zu einer Auswahl der zweiten Konfiguration des elektropneumatischen Feststellbremsmoduls führt. Liegt die Umgebungstemperatur hingegen oberhalb der vordefinierten Temperatur(-schwelle) kann die dynamische Konfigurationsanforderung in Abhängigkeit der Neigung des Fahrzeugs bereitgestellt werden. Beispielsweise kann in einem solchen Fall bei Abstellen des Fahrzeugs bei einer Neigung von mehr als 3° die erste Konfiguration ausgewählt werden.

In einer bevorzugten Ausgestaltung des Verfahrens ist die Parametrisierung durch Einstellen einer Parameterschwelle zumindest eines Parameters der Parametrisierung einstellbar. Beispielsweise kann eine Temperaturschwelle, für die zwischen der ersten Konfiguration und der zweiten Konfiguration des elektropneumatischen Feststellbremsmoduls gewechselt wird, angepasst werden.

Vorzugsweise umfasst die Parametrisierung zumindest einen Positionsparameter, wobei das Verfahren ferner aufweist: Ermitteln einer aktuellen Position des Fahrzeugzugs unter Verwendung eines GPS-Signals und/oder basierend auf Kartendaten; Vergleichen der aktuellen Position mit dem Positionsparameter, und Bereitstellen der dynamischen Konfigurationsanforderung zumindest teilweise in Abhängigkeit eines Ergebnisses des Vergleichs der aktuellen Position mit dem Positionsparameter. In der bevorzugten Weiterbildung ermöglicht das Verfahren ein Auswählen aus der ersten Konfiguration und der zweiten Konfiguration des elektropneumatischen Feststellbremsmoduls in Abhängigkeit der Position des Fahrzeugzugs. Beispielsweise kann die dynamische Konfigurationsanforderung so bereitgestellt werden, dass immer dann, wenn sich der Fahrzeugzug in Westeuropa befindet, die erste Konfiguration ausgewählt wird, und immer dann, wenn sich der Fahrzeugzug in Skandinavien befindet, die zweite Konfiguration ausgewählt wird. Die bevorzugte Weiterbildung des Verfahrens erlaubt so ein besonders einfaches und sicheres Bereitstellen einer Feststellbremsfunktion. Die aktuelle Position des Fahrzeugzugs kann unter Verwendung eines GPS-Signals ermittelt werden. Alternativ oder ergänzend kann die aktuelle Position des Fahrzeugzugs auch unter Verwendung von Kartendaten ermittelt werden. Beispielsweise kann eine Positionsänderung des Fahrzeugs durch Überwachen von Fahrzeugparametern (bzw. Odometrie) ermittelt werden. Unter Verwendung von Kartendaten und bei bekanntem Startpunkt kann aus der Positionsänderung auf die Endposition des Fahrzeugs bzw. die Position des Fahrzeugs beim Bereitstellen der Feststellbremsanforderung geschlossen werden. Der Positionsparameter kann beispielsweise Längengrade und/oder Breitengrade und/oder Ländergrenzen umfassen.

Bevorzugt umfasst die Parametrisierung einen Witterungsparameter, wobei das Verfahren ferner aufweist: Ermitteln einer Witterungsbedingung in der Umgebung des Fahrzeugzugs unter Verwendung von Witterungsinformationen; Ermitteln, ob die Witterungsbedingung den Witterungsparameter erfüllt, und Bereitstellen der dynamischen Konfigurationsanforderung zumindest teilweise in Abhängigkeit des Witterungsparameters, falls die Witterungsbedingung den Witterungsparameter erfüllt. Die Witterungsinformationen werden vorzugsweise unter Verwendung eines Witterungssensors des Zugfahrzeugs ermittelt, aus einer (Wetter-)Vorhersage abgeleitet und/oder von einer drahtlosen Kommunikationseinheit des Fahrzeugzugs empfangen. Der Witterungsparameter kann beispielsweise ein Niederschlagsparameter sein, der eine Mindestniederschlagsmenge definiert. Übersteigt eine ermittelte Niederschlagsmenge der Witterungsbedingung die Mindestniederschlagsmenge, kann die dynamische Konfigurationsanforderung entsprechend bereitgestellt werden. So kann beispielsweise bei besonders hohen Niederschlägen die erste Konfiguration des elektropneumatischen Feststellbremsmoduls ausgewählt werden.

In einer bevorzugten Weiterbildung ist oder umfasst der Witterungsparameter einen Temperaturparameter. Die Witterungsbedingung ist oder umfasst eine Umgebungstemperatur, wobei die Witterungsbedingung den Witterungsparameter erfüllt, wenn die Umgebungstemperatur einen Temperaturschwellwert des Temperaturparameters unterschreitet. Die Umgebungstemperatur kann eine aktuelle Umgebungstemperatur des Fahrzeugzugs sein. Die Umgebungstemperatur kann aber auch eine zu erwartende minimale und/oder maximale Umgebungstemperatur umfassen. Beispielsweise kann basierend auf einer Wettervorhersage eine zu erwartende Tiefsttemperatur ermittelt werden. Der Temperaturschwellwert kann beispielsweise am Gefrierpunkt gesetzt werden sofern die aktuelle Umgebungstemperatur oder die zu erwartende Umgebungstemperatur den Gefrierpunkt unterschreitet, kann die dynamische Konfigurationsanforderung so bereitgestellt werden, dass die zweite Konfiguration des elektropneumatischen Feststellbremsmoduls ausgewählt wird.

In einer bevorzugten Ausgestaltung des Verfahrens umfasst die Parametrisierung einen Neigungsparameter, wobei das Verfahren ferner aufweist: Ermitteln einer aktuellen Neigung des Fahrzeugzugs unter Verwendung eines Neigungssensors des Fahrzeugzugs, Ermitteln, ob die aktuelle Neigung den Neigungsparameter erfüllt, und Bereitstellen der dynamischen Konfigurationsanforderung zumindest teilweise in Abhängigkeit des Neigungsparameters, falls die aktuelle Neigung den Neigungsparameter erfüllt. Vorzugsweise erfüllt die aktuelle Neigung den Neigungsparameter dann, wenn die aktuelle Neigung einen Neigungsschwellwert des Neigungsparameters überschreitet. Alternativ oder ergänzend kann die aktuelle Neigung des Fahrzeugzugs auch unter Verwendung von Kartendaten ermittelt werden. Beispielsweise können die Kartendaten Informationen über die Neigung einer Straße umfassen, auf der das Fahrzeug abgestellt wird. In der bevorzugten Weiterbildung kann beispielsweise erreicht werden, dass die erste Konfiguration des elektropneumatischen Feststellbremsmoduls immer dann ausgewählt wird, wenn der Fahrzeugzug an einem Hang abgestellt wird. So stellen auch die Bremsen des Anhängerwagens eine Bremskraft bereit und die Feststellbremsfunktion muss nicht allein von den Bremsen des Zugfahrzeugs bereitgestellt werden. Die Feststellbremsfunktion kann so besonders sicher bereitgestellt werden.

Vorzugsweise umfasst die Parametrisierung einen Anhängerausstattungsparameter, wobei das Verfahren aufweist: Ermitteln eines Anhängerausstattungsparameter-Ist-Wertes basierend auf einem Anhängerausstattungssignal und/oder basierend auf einer Nutzereingabe; Auswählen der zweiten Konfiguration des elektropneumatischen Feststellbremsmoduls, falls der Anhängerausstattungsparameter-Ist-Wert einen Anhängerwagen mit eigener Anhängerfeststellbremse repräsentiert. In Fällen, in denen der Anhängerwagen eine eigene Feststellbremsanforderung aufweist, ist es in der Regel nicht nötig, dass die Betriebsbremsen des Anhängerwagens eine Feststellbremsfunktion übernehmen. In solchen Fällen können die Betriebsbremsen des Anhängerwagens daher beim Abstellen des Fahrzeugs stets entlüftet sein. Wenn der Anhängerausstattungsparameter-Ist-Wert einen Anhängerwagen mit eigener Anhängerfeststellbremse repräsentiert, kann dann die dynamische Konfigurationsanforderung vorzugsweise so bereitgestellt werden, dass die zweite Konfiguration des elektropneumatischen Feststellbremsmoduls ausgewählt wird. Vorzugsweise hat der Anhängerausstattungsparameter die höchste Priorität aller Parameter der Parametrisierung.

Es soll verstanden werden, dass die vorstehend beschriebenen bevorzugten Weiterbildungen auch kombiniert werden können. Beispielsweise kann die Parametrisierung einen Neigungsparameter und einen Witterungsparameter umfassen. In solchen Varianten kann beispielsweise bei Unterschreiten des Temperaturschwellwerts nur dann die zweite Konfiguration des elektropneumatischen Feststellbremsmoduls ausgewählt werden, wenn das Fahrzeug in der Ebene abgestellt wird. Wenn hingegen das Fahrzeug an einem Hang abgestellt wird, kann die dynamische Konfigurationsanforderung so bereitgestellt werden, dass auch dann die erste Konfiguration des elektropneumatischen Feststellbremsmoduls ausgewählt wird, wenn die aktuelle oder zu erwartende Umgebungstemperatur den Temperaturschwellwert unterschreitet. In solchen Varianten hat der Neigungsparameter dann eine höhere Priorität als der der Temperaturparameter. Es kann aber beispielsweise auch vorgesehen sein, dass die zweite Konfiguration und/oder die erste Konfiguration immer dann ausgewählt wird, wenn einer der Parameter der Parametrisierung erfüllt ist. Es soll verstanden werden, dass das Bereitstellen der Konfigurationsanforderung zumindest dann erfolgt, wenn die Feststellbremsanforderung bereitgestellt wird. Vorzugsweise wird also zumindest dann eine Konfigurationsanforderung bereitgestellt, wenn der Fahrzeugzug abgestellt werden soll bzw. eine Feststellbremse des Fahrzeugzugs eingelegt werden soll.

In einer bevorzugten Variante des Verfahrens erfolgt das Bereitstellen einer Konfigurationsanforderung durch eine Kommunikationseinheit des Fahrzeugzugs, die dazu ausgebildet ist, Anforderungssignale von fahrzeugexternen Kommunikationseinheiten zu erhalten. Alternativ oder ergänzend kann eine Steuereinheit des Fahrzeugzugs die Konfigurationsanforderung auch unter Verwendung von Anforderungssignalen generieren, die mittels der Kommunikationseinheit von fahrzeugexternen Kommunikationseinheiten erhalten werden.

Gemäß einem zweiten Aspekt der Erfindung wird die eingangs genannte Aufgabe durch ein elektropneumatisches Feststellbremsmodul für ein elektronisch steuerbares pneumatisches Bremssystem gelöst. Das Bremssystem ist vorzugsweise für einen Fahrzeugzug mit einem Zugfahrzeug und einem Anhängerwagen vorgesehen. Das Bremssystem ist insbesondere zum Durchführen eines Verfahrens gemäß einer der vorstehend beschriebenen bevorzugten Ausführungsformen ausgebildet. Das elektropneumatische Feststellbremsmodul umfasst einen Vorratsanschluss zum Empfangen von Vorratsdruck, einen Feststellbremsanschluss, einen Anhängersteuerventilanschluss, eine elektropneumatische Ventileinheit und eine elektronische Steuereinheit. Das elektropneumatische Feststellbremsmodul ist zwischen einer ersten Konfiguration, in dem bei Vorliegen einer Feststellbremsanforderung am Feststellbremsanschluss ein Feststellbremsdruck und am Anhängersteuerventilanschluss ein zum Feststellbremsdruck im Wesentlichen identischer Anhängersteuerdruck ausgesteuert wird, und einer zweiten Konfiguration, in dem bei Vorliegen einer Feststellbremsanforderung am Feststellbremsanschluss ein Feststellbremsdruck ausgesteuert und am Anhängersteuerventilanschluss der Vorratsdruck bereitgestellt wird, bistabil umschaltbar. Das Feststellbremsmodul weist eine elektronische Steuereinheit auf, die dazu ausgebildet ist, eine Konfigurationsanforderung zu empfangen und basierend auf der Konfigurationsanforderung zwischen der ersten Konfiguration und der zweiten Konfiguration zu schalten.

Gemäß einem dritten Aspekt der Erfindung wird in eingangs genannte Aufgabe durch ein elektropneumatisches Bremssystem für ein Zugfahrzeug gelöst, das ein elektropneumatisches Feststellbremsmodul gemäß dem zweiten Aspekt der Erfindung umfasst.

Ausführungsformen der Erfindung werden nun nachfolgend anhand der Zeichnungen beschrieben. Diese sollen die Ausführungsformen nicht notwendigerweise maßstäblich darstellen, vielmehr sind die Zeichnungen, wenn dies zur Erläuterung dienlich ist, in schematisierter und/oder leicht verzerrter Form ausgeführt. Im Hinblick auf Ergänzungen der aus den Zeichnungen unmittelbar erkennbaren Lehren wird auf den einschlägigen Stand der Technik verwiesen. Dabei ist zu berücksichtigen, dass vielfältige Modifikationen und Änderungen betreffend die Form und das Detail einer Ausführungsform vorgenommen werden können, ohne von der allgemeinen Idee der Erfindung abzuweichen. Die in der Beschreibung, in den Zeichnungen sowie in den Ansprüchen offenbarten Merkmale der Erfindung können sowohl einzeln als auch in beliebiger Kombination für die Weiterbildung der Erfindung wesentlich sein. Zudem fallen in den Rahmen der Erfindung alle Kombinationen aus zumindest zwei der in der Beschreibung, den Zeichnungen und/oder den Ansprüchen offenbarten Merkmale. Die allgemeine Idee der Erfindung ist nicht beschränkt auf die exakte Form oder das Detail der im Folgenden gezeigten und beschriebenen bevorzugten Ausführungsformen oder beschränkt auf einen Gegenstand, der eingeschränkt wäre im Vergleich zu dem in den Ansprüchen beanspruchten Gegenstand. Bei angegebenen Bemessungsbereichen sollen auch innerhalb der genannten Grenzen liegende Werte als Grenzwerte offenbart und beliebig einsetzbar und beanspruchbar sein. Der Einfachheit halber sind nachfolgend für identische oder ähnliche Teile oder Teile mit identischer oder ähnlicher Funktion gleiche Bezugszeichen verwendet.

Weitere Vorteile, Merkmale und Einzelheiten der Erfindung ergeben sich aus der nachfolgenden Beschreibung der bevorzugten Ausführungsformen sowie anhand der Zeichnungen; diese zeigen in:
- Fig. 1: eine schematische Darstellung eines Fahrzeugzugs;
- Fig. 2: eine schematische Darstellung eines elektropneumatischen Feststellbremsmoduls;
- Fig. 3: ein erstes Ausführungsbeispiel eines Verfahrens zum Bereitstellen einer Feststellbremsfunktion
- Fig. 4a: ein Ausführungsbeispiel des Verfahrens für den Fall, dass nur eine statische Konfigurationsanforderung bereitgestellt wird;
- Fig. 4b: ein Ausführungsbeispiel des Verfahrens für den Fall, dass sowohl eine statische als auch eine dynamische Konfigurationsanforderung bereitgestellt wird;
- Fig. 5: eine schematische Darstellung, die eine Parametrisierung illustriert;
- Fig. 6: ein zweites Ausführungsbeispiel eines Verfahrens zum Bereitstellen einer Feststellbremsfunktion;
- Fig. 7: ein drittes Ausführungsbeispiel eines Verfahrens zum Bereitstellen einer Feststellbremsfunktion; und in
- Fig. 8: ein viertes Ausführungsbeispiel eines Verfahrens zum Bereitstellen einer Feststellbremsfunktion.

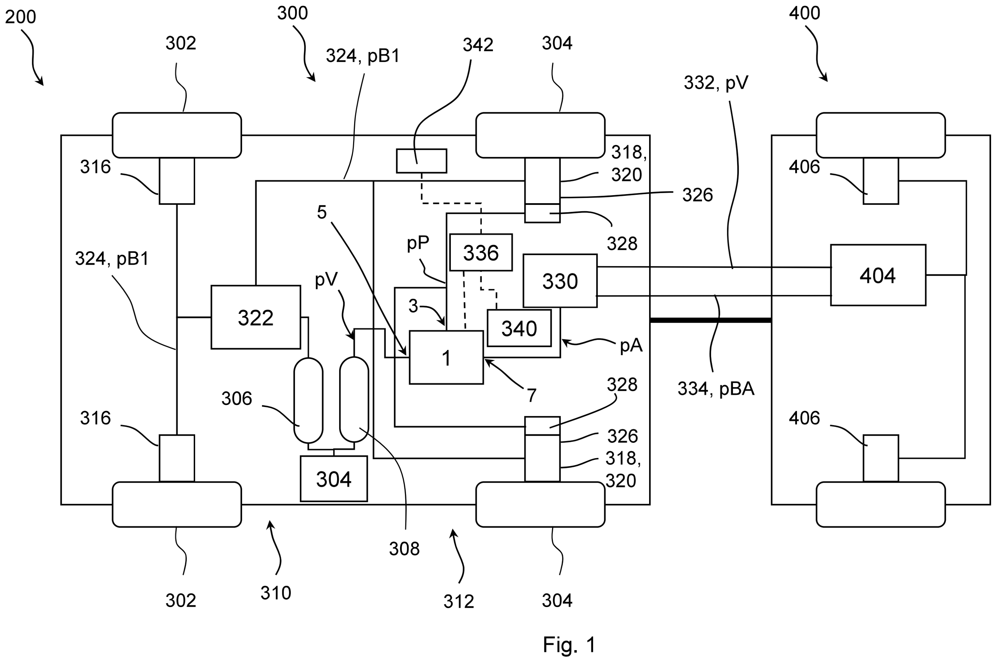

Fig. 1 zeigt in vereinfachter schematischer Darstellung einen Fahrzeugzug 200 mit einem Zugfahrzeug 300 und einem an das Zugfahrzeug 300 angekoppelten Anhängerwagen 400. Das Zugfahrzeug 300 ist ein angetriebenes Zugfahrzeug 300, welches als Antrieb beispielsweise einen Verbrennungsmotor oder Elektromotor aufweist. Der Anhängerwagen 400 verfügt im gezeigten Beispiel über keinen eigenen Antrieb und wird vom Zugfahrzeug 300 gezogen.

Das Zugfahrzeug 300 weist ein elektropneumatisches Bremssystem 302 auf. Das elektropneumatische Bremssystem 302 versorgt auch eine Anhängerbremse 402 des Anhängerwagens 400 mit Druckluft. Ferner steuert das elektropneumatische Bremssystem 302 die Anhängerbremse 402 des Anhängerwagens an. Das elektropneumatische Bremssystem 302 umfasst einen Kompressor 304, der das Bremssystem 302 mit Druckluft versorgt. Die vom Kompressor 304 bereitgestellte Druckluft wird in einem ersten Druckluftvorrat 306 und einem zweiten Druckluftvorrat 308 des elektropneumatischen Bremssystems 302 gespeichert. Zur Reinigung und/oder Entfeuchtung der Druckluft können weitere in Fig. 1 nicht gezeigte Vorrichtungen vorgesehen sein.

Der erste Druckluftvorrat 306 ist einem Betriebsbremskreis 310 des elektropneumatischen Bremssystems 302 zugeordnet und versorgt diesen mit Versorgungsdruck pV.

Der zweite Druckluftvorrat 308 ist einem Feststellbremskreis 312 des elektropneumatischen Bremssystems 302 zugeordnet und versorgt diesen ebenfalls mit Versorgungsdruck pV. Es soll jedoch verstanden werden, dass der Feststellbremskreis 312 und der Betriebsbremskreis 310 auch mit verschiedenen Versorgungsdrücken pV versorgt werden können.

Zur Vereinfachung ist in Fig. 1 nur ein erster Druckluftvorrat 306 und nur ein Betriebsbremskreis 310 dargestellt. Es kann aber vorzugsweise auch vorgesehen sein, dass das Bremssystem 302 mehrere Betriebsbremskreise 310 und/oder mehrere erste Druckluftvorräte 306 aufweist.

Das Bremssystem 302 umfasst ferner Bremszylinder 316, 318. Vorderrädern 302 des Zugfahrzeugs 300 zugeordnete erste Bremszylinder 316 sind hier nur zum Bereitstellen einer Betriebsbremsfunktion ausgebildet. Hinterrädern 304 des Zugfahrzeugs 300 zugeordnete zweite Bremszylinder 318 sind im gezeigten Ausführungsbeispiel sowohl als Betriebsbremsen als auch als Feststellbremsen verwendbar. Konkret sind die zweiten Bremszylinder 318 als Federspeicherbremszylinder 320 ausgebildet. Zum Bereitstellen einer Betriebsbremsfunktion weist das elektropneumatische Bremssystem 302 ein als Modulator ausgebildetes Betriebsbremsmodul 322 auf. Das Betriebsbremsmodul 322 kann über entsprechende Betriebsbremsleitungen 324 einen ersten Bremsdruck pB1 an den Bremszylindern 316,318 bereitstellen. Durch Bereitstellen des ersten Bremsdrucks pB1 steuert das Betriebsbremsmodul 322 einen Betriebsbremsteil 326 der Federspeicherbremszylinder 320 an. Es soll jedoch verstanden werden, dass an verschiedenen Bremszylinder 316,318 auch voneinander verschiedene erste Bremsdrücke pB1 bereitgestellt werden können, um eine Betriebsbremsfunktion zu realisieren.

Ein Federspeicherteil 328 der Bremszylinder 320 ist zum Bereitstellen einer Feststellbremsfunktion des Zugfahrzeugs 300 vorgesehen. In dem Federspeicherteil 328 ist eine nicht näher gezeigte Feder angeordnet.

Die Feststellbremsfunktion des Fahrzeugzugs 200 wird mittels eines elektropneumatischen Feststellbremsmoduls 1 sowie mittels der Federspeicherbremszylinder 320 bereitgestellt. Zum Einlegen der Feststellbremse des Zugfahrzeugs 300 wird der Federspeicherteil 328 der Federspeicherbremszylinder 320 mittels des elektropneumatischen Feststellbremsmoduls 1 mit einem Feststellbremsdruck pP versorgt, der hier dem Umgebungsdruckniveau entspricht. Zum Einlegen der Feststellbremse wird der Federspeicherbremszylinder 320 also entlüftet, so dass die Feder des Federspeicherteils 328 den Federspeicherbremszylinder 320 betätigt und somit die Feststellbremse einlegt. Zum Lösen der Feststellbremse bzw. im Fährbetrieb des Fahrzeugzugs 200 wird der Federspeicherteil 328 des Federspeicherbremszylinders 320 mittels des elektropneumatischen Feststellbremsmoduls 1 mit einem positiven Feststellbremsdruck pP versorgt, so dass die Feststellbremse gegen die Kraft der Feder des Federspeicherteils 328 gelöst bzw. gelöst gehalten wird.

Das Entlüften und das Belüften des Federspeicherteils 328 des Federspeicherbremszylinders 320 erfolgt über einen Feststellbremsanschluss 3 des elektropneumatischen Feststellbremsmoduls 1. Ein Vorratsanschluss 5 des elektropneumatischen Feststellbremsmoduls 1 ist mit dem zweiten Druckluftvorrat 308 zum Empfangen vor Vorratsdruck pV verbunden.

Das Bremssystem 302 verfügt ferner über ein Anhängersteuerventil 330 zur Ansteuerung der Anhängerbremse 402. Die Anhängerbremse 402 ist über eine Versorgungsleitung 332 und eine Steuerleitung 334 mit dem Anhängersteuerventil 330 verbunden. Über die Versorgungsleitung 332 stellt das Anhängersteuerventil 330 Versorgungsdruck pV an einem Anhängerbremsmodul 404 der Anhängerbremse 402 bereit. Mittels der Steuerleitung 334 stellt das Anhängersteuerventil 330 des elektropneumatischen Bremssystems 302 einen Anhängerbremsdruck pBA am Anhängerbremsmodul 404 bereit oder entlüftet dieses. Über das Anhängerbremsmodul 404 der Anhängerbremse 402 wird wenigstens ein Anhängerbremszylinder 406 gemäß einem Druck in der Steuerleitung 334 angesteuert. Der Anhängerbremsdruck pBA wird dabei im Fahrbetrieb vom Betriebsbremsmodul 322 ausgesteuert und über das Anhängersteuerventil 330 und die Steuerleitung 334 an der Anhängerbremse 402 bereitgestellt.

Das Anhängersteuerventil 330 ist ferner über einen Anhängersteuerventilanschluss 7 des elektropneumatischen Feststellbremsmoduls 1 mit dem elektropneumatischen Feststellbremsmodul 1 verbunden. Das elektropneumatische Feststellbremsmodul 1 ist dazu ausgebildet, am Anhängerventilanschluss 7 einen Anhängersteuerdruck pA auszusteuern oder den Anhängerventilanschluss 7 zu entlüften. Das Anhängersteuerventil 330 verfügt über eine gegenüber dem Druck am Anhängersteuerventilanschluss 7 invertierende Schaltfunktion. Eine Erhöhung des Anhängersteuerdrucks pA am Anhängerventilanschluss 7 führt zu einer Druckabnahme in der Steuerleitung 334 und eine Reduzierung des Anhängersteuerdrucks pA resultiert in einer Erhöhung des über die Steuerleitung 334 an der Anhängerbremse 402 bereitgestellten Drucks. Im gezeigten Ausführungsbeispiel stellt das Anhängersteuerventil 330 als Anhängerbremsdruck pBA einen Versorgungsdruck pV an der Steuerleitung 334 bereit, wenn der Anhängerventilanschluss 7 entlüftet wird bzw. ein dem Umgebungsdruck entsprechender Anhängersteuerdruck pA bereitgestellt wird. Daher wird die Anhängerbremse 402 betätigt, wenn der Anhängersteuerventilanschluss 7 entlüftet wird. Wenn der Anhängersteuerventilanschluss 7 belüftet bzw. mit einem positiven Anhängersteuerdruck pA versorgt wird, dann wird Anhängerbremse 402 gelöst, sofern die Anhängerbremse 402 nicht mittels des Betriebsbremsmoduls 322 betätigt wird.

Beim Parken des Fahrzeugzugs 200 in Mitteleuropa oder Westeuropa müssen sowohl die Feststellbremse des Zugfahrzeugs 300 als auch die Anhängerbremse 402 des Anhängerwagens 400 eingelegt bzw. betätigt werden. Das elektropneumatische Feststellbremsmodul 1 ist dabei dazu ausgebildet, zum Parken des Fahrzeugzugs 200 sowohl den Feststellbremsanschluss 3 als auch den Anhängersteuerventilanschluss 7 zu entlüften, sodass der Anhängerbremszylinder 406 belüftet wird.

Andererseits wird jedoch in mehreren skandinavischen Ländern gefordert, dass die Anhängerbremse 402 beim Abstellen des Fahrzeugzugs 200 generell gelöst wird und gelöst bleibt, insbesondere um ein Festfrieren der Anhängerbremse 402 zu verhindern. Zu diesem Zweck ist das elektropneumatische Feststellbremsmodul 1 dazu ausgebildet, ein Abstellen des Fahrzeugzugs 200 mit gelöster Anhängerbremse 402 des Anhängerwagens 400 zu ermöglichen. In diesem Fall entlüftet das elektropneumatische Feststellbremsmodul 1 zum Parken des Fahrzeugzugs 200 den Feststellbremsanschluss 3 und belüftet zeitgleich den Anhängersteuerventilanschluss 7 mit dem Anhängersteuerdruck pA, insbesondere einem Anhängersteuerdruck pA mit dem Druckniveau des Vorratsdrucks pV. Aufgrund der invertierenden Funktion des Anhängersteuerventils 330 wird der Anhängerbremszylinder 406 beim Bereitstellen des Anhängersteuerdrucks pA am Anhängersteuerventilanschluss 7 entlüftet und die Anhängerbremse 402 gelöst.

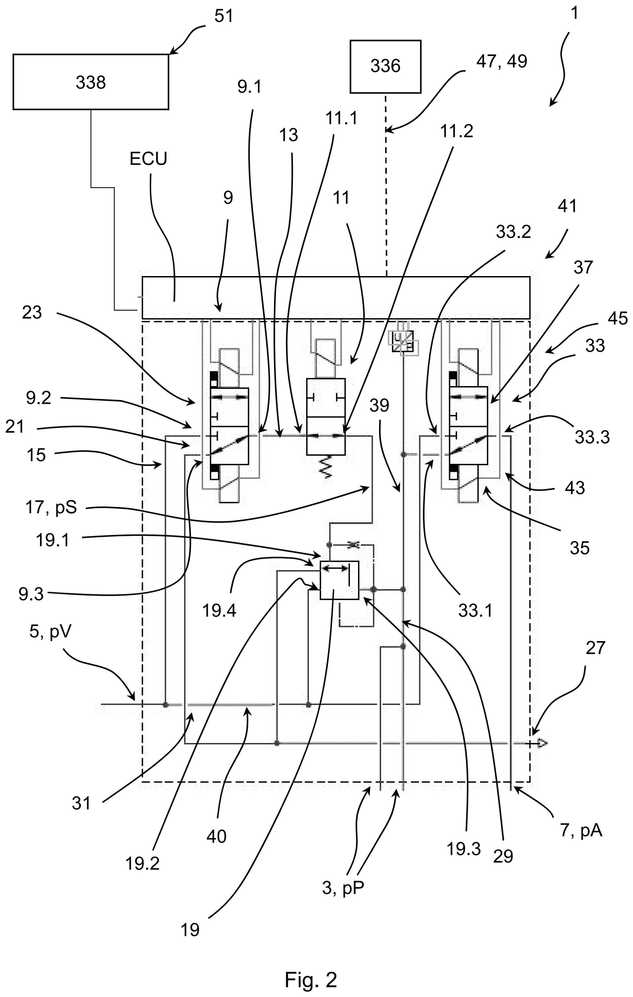

Fig. 2 zeigt ein Schaltbild des elektropneumatischen Feststellbremsmoduls 1. Das Feststellbremsmodul 1 umfasst eine elektropneumatische Ventileinheit 41. Das Feststellbremsmodul 1 umfasst ein Druckänderungsventil 9, ein Halteventil 11 und eine erste Leitung 13. Die erste Leitung 13 verbindet einen Arbeitsanschluss 9.1 des Druckänderungsventils 9 mit einem Einlassanschluss 11.1 des Halteventils 11. Das Druckänderungsventil 9 und das Halteventil 11 bilden gemeinsam eine Vorsteuereinheit des elektropneumatischen Feststellbremsmoduls 1, die zum Aussteuern eines pneumatischen Steuerdruckes pS ausgebildet ist. Ein Versorgungsanschluss 9.2 des Druckänderungsventils 9 ist über eine Versorgungsleitung 15 mit dem Vorratsanschluss 5 des elektropneumatischen Feststellbremsmoduls 1 verbunden. Am Versorgunganschluss 9.1 empfangener Vorratsdruck pV wird von dem Druckänderungsventil 9 moduliert und als Steuerdruck pS am Arbeitsanschluss 9.1 bereitgestellt. Über das Halteventil 11 und eine zweite Leitung 17 kann der Steuerdruck pS an einem Steueranschluss 19.1 eines Relaisventils 19 bereitgestellt werden. Es kann aber auch vorgesehen sein, dass das Druckänderungsventil 9 eine reine Schaltfunktion aufweist bzw. keine Druckmodulation vornehmen kann. Eine Modulation ist aber wünschenswert, falls über das Feststellbremsmodul 1 eine Hilfsbremsfunktion bereitgestellt werden soll.

Das Halteventil 11 ist dazu ausgebildet, den Steuerdruck pS in der zweiten Leitung 17 zu halten. Hierfür kann das Halteventil 11 zischen der in Fig. 2 gezeigten Schaltstellung, in der der Einlassanschluss 11.1 des Halteventils 11 mit einem Auslassanschluss 11.2 des Halteventils 11 pneumatisch verbunden ist, in eine zweite Schaltstellung geschaltet werden, in der die pneumatische Verbindung zwischen dem Einlassanschluss 11.1 und dem Auslassanschluss 11.2 unterbrochen ist. Im gezeigten Ausführungsbeispiel ist das Halteventil 11 ein 2/2-Wegeventil, insbesondere ein magnetisch schaltbares 2/2-Wegeventil. Das Halteventil 11 ist vorzugsweise in die geöffnete Schaltstellung vorgespannt, in der der Einlassanschluss 11.1 pneumatisch mit dem Auslassanschluss 11.2 verbunden ist. Falls eine elektronische Steuereinheit ECU des elektropneumatischen Feststellbremsmoduls 1 stromlos ist, schaltet das Halteventil 11 selbstgängig in die geöffnete Schaltstellung.

Im in Fig. 2 dargestellten Ausführungsbeispiel des elektropneumatischen Feststellbremsmoduls 1 ist das Druckänderungsventil 9 ein 3/2-Wegeventil, das eine erste Schaltstellung 21 und eine zweite Schaltstellung 23 aufweist. Das Druckänderungsventil 9 ist elektromagnetisch zwischen diesen Schaltstellungen 21,23 umschaltbar. Hier ist das Druckänderungsventil 9 ein bistabiles Ventil bzw. zwischen der ersten Schaltstellung 21 und der zweiten Schaltstellung 23 bistabil umschaltbar. Nach dem elektromagnetischen Umschalten verbleibt das Druckänderungsventil 9 auch im Falle eines Spannungsausfalls am elektropneumatischen Feststellbremsmodul 1, insbesondere an der elektronischen Steuereinheit ECU, in seiner jeweiligen Schaltstellung 21, 23.

In seiner zweiten Schaltstellung 23, sind der Arbeitsanschluss 9.1 und der Versorgungsanschluss 9.2 des Druckänderungsventils 9 pneumatisch verbunden. Über den Vorratsanschluss 5 am Versorgungsanschluss 9.2 anliegender Versorgungsdruck pV kann so als Steuerdruck pS an der ersten Leitung 13 bereitgestellt werden. In der ersten Schaltstellung 21 des Druckänderungsventils 9 ist der Arbeitsanschluss 9.1 hingegen mit einem Entlüftungsanschluss 9.3 des Druckänderungsventils 9 verbunden. Über eine Entlüftungsleitung 25 ist der Entlüftungsanschluss 9.3 des Druckänderungsventils 9 mit einer Entlüftung 27 des elektropneumatischen Feststellbremsmoduls 1 verbunden. In der ersten Schaltstellung 21 des Druckänderungsventils 9 kann so ein am Arbeitsanschluss 9.1 anliegender Steuerdruck pS bzw. ein in der ersten Leitung 13 anliegender Druck bis auf den Umgebungsdruck abgesenkt werden. Wenn der Einlassanschluss 11.1 und der Auslassanschluss 11.2 des Druckänderungsventils 11 pneumatisch verbunden sind, kann so der Steueranschluss 19.1 des Relaisventils 19 über das Druckänderungsventil 9 entlüftet werden. In der zweiten Schaltstellung 23 des Druckänderungsventils 9 kann hingegen der Steuerdruck pS am Steueranschluss 19.1 des Relaisventils 19 ausgesteuert werden. Beispielsweise und bevorzugt kann über den Vorratsanschluss 5, die Versorgungsleitung 15, dass in die zweite Schaltstellung 23 geschaltete Druckänderungsventil 9, die erste Leitung 13, das Halteventil 11 und die zweite Leitung 17 der Vorratsdruck pV als Steuerdruck pS an dem Steueranschluss 19.1 des Relaisventils 19 ausgesteuert werden.

Im gezeigten Ausführungsbeispiel ist das Relaisventil 19 zum Aussteuern eines Feststellbremsdrucks pP am Feststellbremsanschluss 3 des elektropneumatischen Feststellbremsmodul 1 vorgesehen. Das Relaisventil 19 weist neben dem Steueranschluss 19.1 einen Relaisventil-Versorgungsanschluss 19.2, einen Relaisventil-Arbeitsanschluss 19.3 und einen Relaisventil-Entlüftungsanschluss 19.4 auf. Das Relaisventil 19 ist dazu ausgebildet, an seinem Relaisventil-Arbeitsanschluss 19.3 den am Steueranschluss 19.1 anliegenden Druck mit einer größeren Luftmenge bereit zu stellen. Es soll jedoch verstanden, dass das Relaisventil 19 nicht zwingend einen zum Steuerdruck pS niveau-identischen Feststellbremsdruck pP bereitstellen muss. Der am Relaisventil-Arbeitsanschluss 19.3 ausgesteuerte Feststellbremsdruck pP wird über eine dritte Leitung 29 an den Feststellbremsanschlüssen 3 bereitgestellt.

Die Volumenverstärkung durch das Relaisventil 19 erlaubt eine leichtgängige Betätigung der Feststellbremse des Zugfahrzeugs 300. Über eine zweite Versorgungsleitung 31 wird der Relaisventil-Versorgungsanschluss 19.2 vom Vorratsanschluss 5 des elektropneumatischen Feststellbremsmodul 1 mit Vorratsdruck pV versorgt. Zudem kann der Feststellbremsanschluss 3 (bzw. in Fig. 2 die Feststellbremsanschlüsse 3) über das Relaisventil 19 und dessen Relaisventil-Entlüftungsanschluss 19.4 entlüftet werden. Zum Einlegen der Feststellbremse des Zugfahrzeugs 200 wird der Feststellbremsanschluss 3 über das Relaisventil 19 entlüftet bzw. ein im Wesentlichen dem Umgebungsdruck entsprechender Feststellbremsdruck pP am Feststellbremsanschluss 3 bereitgestellt.

Zum Bereitstellen des Anhängersteuerdrucks pA umfasst das elektropneumatische Feststellbremsmodul 1 ferner ein Ansteuerventil 33. Das Ansteuerventil 33 ist dem Anhängersteuerventil 330 vorgeschaltet und steuert dieses an. Wie bereits mit Bezug zu Fig.1 erläutert, ist das Anhängersteuerventil 330 zum Empfangen des Anhängersteuerdrucks pA mit dem Anhängersteuerventilanschluss 7 des elektropneumatischen Feststellbremsmoduls 1 verbunden.

Im gezeigten Ausführungsbeispiel ist das Ansteuerventil 33 als 3/2-Wegeventil ausgebildet, dass eine erste Schaltstellung 35 und eine zweite Schaltstellung 37 umfasst. In seiner gezeigten ersten Schaltstellung 35 ist ein Ansteuerventil-Arbeitsanschluss 33.3 mit einem ersten Ansteuerventil-Eingangsanschluss 33.1 pneumatisch verbunden. In seiner alternativ einnehmbaren zweiten Schaltstellung 37 ist der Ansteuerventil-Arbeitsanschluss 33.3 pneumatisch mit einem zweiten Ansteuerventil-Eingangsanschluss 33.2 verbunden.

Der erste Ansteuerventil-Eingangsanschluss 33.1 ist über eine vierte Leitung 39 mit dem Feststellbremsanschluss 3 bzw. dem Relaisventil-Arbeitsanschluss 19.3 verbunden. Der am Feststellbremsanschluss 3 anliegende Feststellbremsmodul pP wird also am Ansteuerventil-Arbeitsanschluss 33.3 ausgesteuert, wenn das Ansteuerventil 33 in seiner ersten Schaltstellung 35 ist.

Eine dritte Versorgungsleitung 40 des elektropneumatischen Feststellbremsmodul 1 verbindet den zweiten Ansteuerventil-Eingangsanschluss 33.2 pneumatisch mit dem Vorratsanschluss 5, sodass am Vorratsanschluss 5 bereitgestellter Vorratsdruck pV auch am zweiten Ansteuerventil-Eingangsanschluss 33.2 anliegt. Wenn das Ansteuerventil in seiner zweiten Schaltstellung 37 ist, wird der am zweiten Ansteuerventil-Eingangsanschluss 33.2 anliegende Vorratsdruck pV am Ansteuerventil-Arbeitsanschluss 33.3 ausgesteuert. Abhängig von der Schaltstellung 35,37 des Ansteuerventils 33 wird im gezeigten Ausführungsbeispiel und bevorzugt also entweder der Feststellbremsdruck pP oder der Vorratsdruck pV als Anhängersteuerdruck pA an dem Anhängersteuerventilanschluss 7 des elektropneumatischen Feststellbremsmodul 1 bereitgestellt.

Im gezeigten Ausführungsbeispiel ist das Ansteuerventil 33 ebenfalls Teil der elektropneumatische Ventileinheit 41 des elektropneumatischen Feststellbremsmoduls 1. Die elektroproblematische Ventileinheit 41 ist zwischen einer ersten Konfiguration 43 und einer zweiten Konfiguration 45 bistabil umschaltbar.

In der ersten Konfiguration 43, in der das Ansteuerventil 33 in seiner ersten Schaltstellung 35 ist, wird am Feststellbremsanschluss 3 ein Feststellbremsdruck pP und am Anhängersteuerventilanschluss 7 ein Anhängersteuerdruck pA ausgesteuert, wenn eine Feststellbremsanforderung 47 vorliegt. Im gezeigten Ausführungsbeispiel wird die Feststellbremsanforderung 47 über eine Signalleitung 49 bereitgestellt. Die Signalleitung 49 verbindet die elektronische Steuereinheit ECU des elektropneumatischen Feststellbremsmoduls 1 mit einer Hauptsteuereinheit 336 des Zugfahrzeugs 300. Die elektronische Steuereinheit ECU schaltet bei Vorliegen der Feststellbremsanforderung 47 das Druckänderungsventil 9 in dessen erste Schaltstellung 21. Der Arbeitsanschluss 9.1 des Druckänderungsventils 9 wird mit dem Entlüftungsanschluss 9.3 des Druckänderungsventils 9 verbunden, sodass der Steueranschluss 19.1 des Relaisventil 19 entlüftet wird. Hierdurch wird am Feststellbremsanschluss 3 des elektromagnetischen Feststellbremsmoduls 1 ein dem Umgebungsdruck entsprechender Feststellbremsdruck pP ausgesteuert bzw. der Feststellbremsanschluss 3 entlüftet. Im gezeigten Ausführungsbeispiel wird bei also Vorliegen einer Feststellbremsanforderung 47 ein dem Umgebungsdruck entsprechender Feststellbremsdruck pP ausgesteuert.

In der ersten Konfiguration 43 der elektropneumatischen Ventileinheit 41 ist das Ansteuerventil 33 in der in Fig.1 gezeigten ersten Schaltstellung 35, sodass am Anhängersteuerventilanschluss 7 des elektropneumatischen Feststellbremsmoduls 1 ein zum Feststellbremsdruck pP im Wesentlichen identischer Anhängersteuerdruck pA ausgesteuert wird. Im ersten Ausführungsbeispiel wird also bei Vorliegen der Feststellbremsanforderung 47 sowohl der Feststellbremsanschluss 3 als auch der Anhängersteuerventilanschluss 7 entlüftet. Aufgrund der investierenden Funktion des Anhängersteuerventils 330 wird über die Steuerleitung 334 ein positiver Anhängerbremsdruck pBA an der Anhängerbremse 404 bereitgestellt und die Anhängerbremse 404 eingelegt.

In der zweiten Konfiguration 45 der elektropneumatischen Ventileinheit 41 des elektropneumatischen Feststellbremsmoduls 1 ist das Ansteuerventil 33 in seiner zweiten Schaltstellung 37, sodass der am zweiten Ansteuerventil-Eingangsanschluss 33.2 anliegende Vorratsdruck pV über den Ansteuerventil -Arbeitsanschluss 33.3 als Anhängersteuerdruck pA ausgesteuert wird. Wenn die elektropneumatischen Ventileinheit 41 in der zweiten Konfiguration 45 ist, wird daher bei Vorliegen der Feststellbremsanforderung 47 der Feststellbremsanschluss 3 entlüftet und am Anhängersteuerventilanschluss 7 der Vorratsdruck pV ausgesteuert. Aufgrund der investierenden Funktion des Anhängersteuerventils 330 wird die Steuerleitung 334 entlüftet und die Anhängerbremse 404 freigegeben.

Die Bistabilität der elektropneumatischen Ventileinheit 41 des elektropneumatischen Feststellbremsmoduls 1 wird im gezeigten Ausführungsbeispiel dadurch erreicht, dass das Ansteuerventil 33 bistabil schaltbar ist. Analog zum Druckänderungsventil 9 kann auch das Ansteuerventil 33 elektromagnetisch zwischen seinen Schaltstellungen 35 und 37 umgeschaltet werden. Nach dem Umschalten verbleibt das Ansteuerventil 33 jeweils in der geschalteten Schaltstellung 35 bzw. 37. So kann auch bei unterbrochener Spannungsversorgung ein der ersten Konfiguration 43 bzw. der zweiten Konfiguration 45 entsprechendes Verhalten der elektropneumatischen Ventileinheit 41 sichergestellt werden. Im gezeigten Ausführungsbeispiel entspricht die erste Konfiguration 43 im Wesentlichen der westeuropäischen Ansteuerung während die zweite Konfiguration 45 im Wesentlichen der skandinavischen Ansteuerung entspricht.

Im gezeigten Ausführungsbeispiel wird die Feststellbremsanforderung 47 von der Hauptsteuereinheit 336 des Zugfahrzeugs 300 bereitgestellt. Dies kann beispielsweise in Antwort auf das Betätigen eines in den Figuren nicht gezeigten Feststellbremsschalters durch einen Fahrer des Fahrzeugzugs 200 erfolgen. Eine Auswahl zwischen der ersten Konfiguration 43 und der zweiten Konfiguration 45 des elektropneumatischen Feststellbremsmoduls 1 erfolgt basierend auf einer Konfigurationsanforderung 51.

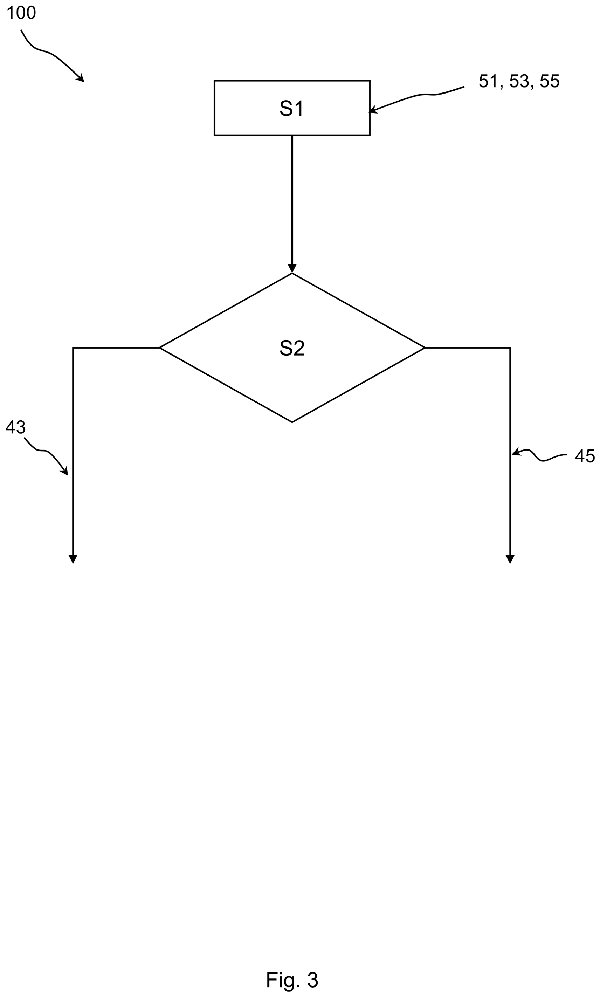

Fig. 3 zeigt schematisch den Ablauf eines bevorzugten Ausführungsbeispiels eines Verfahrens 100 zum Bereitstellen einer Feststellbremsfunktion, insbesondere einer Feststellbremsfunktion wie diese vorstehend mit Bezug zu Fig. 1 und Fig. 2 erläutert wurde. In einem ersten Schritt S1 des Verfahrens 100 wird die Konfigurationsanforderung 51 bereitgestellt. In einem anschließenden zweiten Schritt S2 wird dann durch die elektronische Steuereinheit ECU des elektropneumatischen Feststellbremsmoduls 1 eine Konfiguration des elektropneumatischen Feststellbremsmoduls 1 aus der ersten Konfiguration 43 und der zweiten Konfiguration 45 ausgewählt.

Im gezeigten Ausführungsbeispiel kann die Konfigurationsanforderung 51 eine statische Konfigurationsanforderung 53 und/oder eine dynamische Konfigurationsanforderung 55 umfassen. Die statische Konfigurationsanforderung 53 kann beispielsweise in Folge einer entsprechenden Nutzereingabe durch einen Fahrer des Fahrzeugzugs 200 von der Hauptsteuereinheit 336 an der elektronischen Steuereinheit ECU des elektropneumatischen Feststellbremsmoduls 1 bereitgestellt werden. Auch die dynamische Konfigurationsanforderung 55 kann durch die elektronische Steuereinheit ECU bereitgestellt werden. Alternativ oder ergänzend kann die Konfigurationsanforderung 51 aber beispielsweise auch durch eine Kommunikationseinheit 338 empfangen und an der elektronischen Steuereinheit ECU bereitgestellt werden. Beispielsweise kann die Kommunikationseinheit 338 eine drahtlose Kommunikationseinheit 338 sein, die über ein Mobilfunknetz eine Konfigurationsanforderung 51 empfängt und an der elektronischen Steuereinheit ECU bereitstellt.

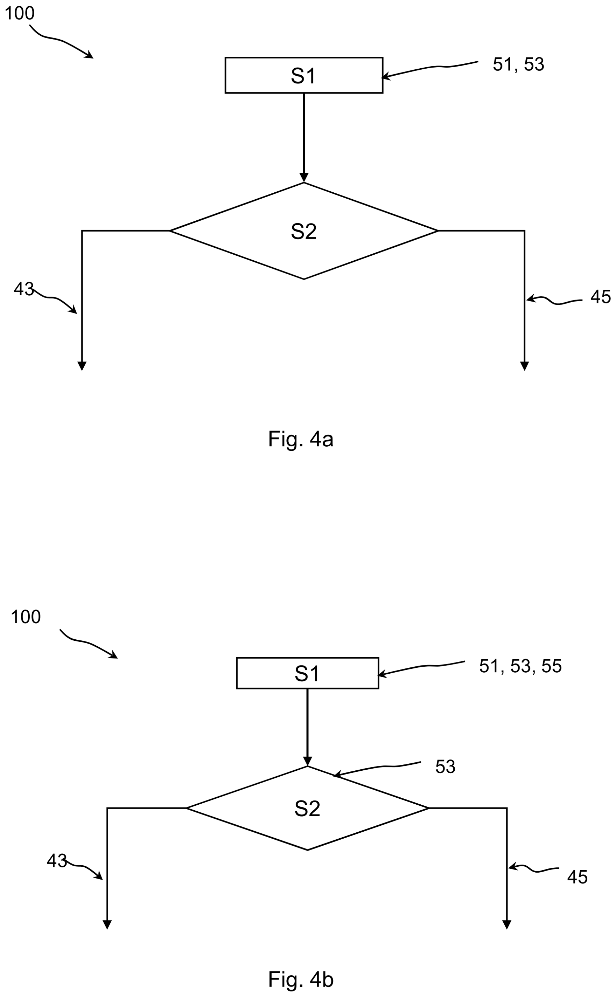

Fig. 4a zeigt ein Ausführungsbeispiel des Verfahrens 100 für den Fall, dass nur eine statische Konfigurationsanforderung 53 bereitgestellt wird. In diesem Fall, wird die statische Konfigurationsanforderung 53 als Konfigurationsanforderung 51 bereitgestellt. Die elektronische Steuereinheit ECU empfängt die statische Konfigurationsanforderung 53 und wählt die zur statischen Konfigurationsanforderung 51 korrespondierende Konfiguration aus der ersten Konfiguration 43 und der zweiten Konfiguration 45 aus. Wenn nur eine dynamische Konfigurationsanforderung 55 bereitgestellt wird, würde die elektronische Steuereinheit ECU eine zur dynamischen Konfigurationsanforderung 55 korrespondierende Konfiguration auswählen.

In Fig. 4b ist ein Ausführungsbeispiel des Verfahrens 100 gezeigt, in dem im ersten Schritt S1 sowohl eine statische Konfigurationsanforderung 53 als auch eine dynamische Konfigurationsanforderung 55 bereitgestellt wird. Beispielsweise kann ein Fahrer des Fahrzeugzugs 200 durch entsprechende Eingabe eine mitteleuropäische Ansteuerung des Anhängerwagens 400 fordern, sodass in Antwort auf diese Eingabe eine korrespondierende statische Konfigurationsanforderung 53 bereitgestellt wird. Ferner kann eine Steuereinheit des Fahrzeugzugs 200 eine dynamische Konfigurationsanforderung 55 bereitstellen. Wie später noch weiter erläutert wird, kann das Bereitstellen der dynamischen Konfigurationsanforderung 55 in Abhängigkeit einer Parametrisierung 57 erfolgen. Im gezeigten Ausführungsbeispielen und bevorzugt wird die statische Konfigurationsanforderung unabhängig von einem Fahrzeugzustand des Fahrzeugzugs 200 und unabhängig von Umgebungsbedingungen bereitgestellt. Insbesondere kann die statische Konfigurationsanforderung53 in Antwort auf eine Nutzereingabe bereitgestellt werden.

Um eine hohe Akzeptanz durch einen Fahrer des Fahrzeugzugs 200 und/oder andere Nutzer des Fahrzeugzugs 200 zu erreichen, ist es in der Regel wünschenswert, wenn die bereitgestellte Feststellbremsfunktion dem Willen des Nutzers folgt. Wenn beispielsweise ein Fahrer des Fahrzeugzugs 200 eine westeuropäische Anhängersteuerung wünscht, dann soll diese auch von dem Bremssystem 302 bereitgestellt werden.

Im bevorzugten Ausführungsbeispiel hat die statische Konfigurationsanforderung 53 daher Vorrang vor der dynamischen Konfigurationsanforderung 55. Wenn also wie im Ausführungsbeispiel der Fig. 4b sowohl eine statische Konfigurationsanforderung 53 als auch eine dynamische Konfigurationsanforderung 55 bereitgestellt werden, dann wird vorzugsweise nur die statische Konfigurationsanforderung 53 bei der Auswahl der Konfiguration des elektropneumatischen Feststellbremsmoduls 1 aus der ersten Konfiguration 43 der zweiten Konfiguration 45 berücksichtigt.

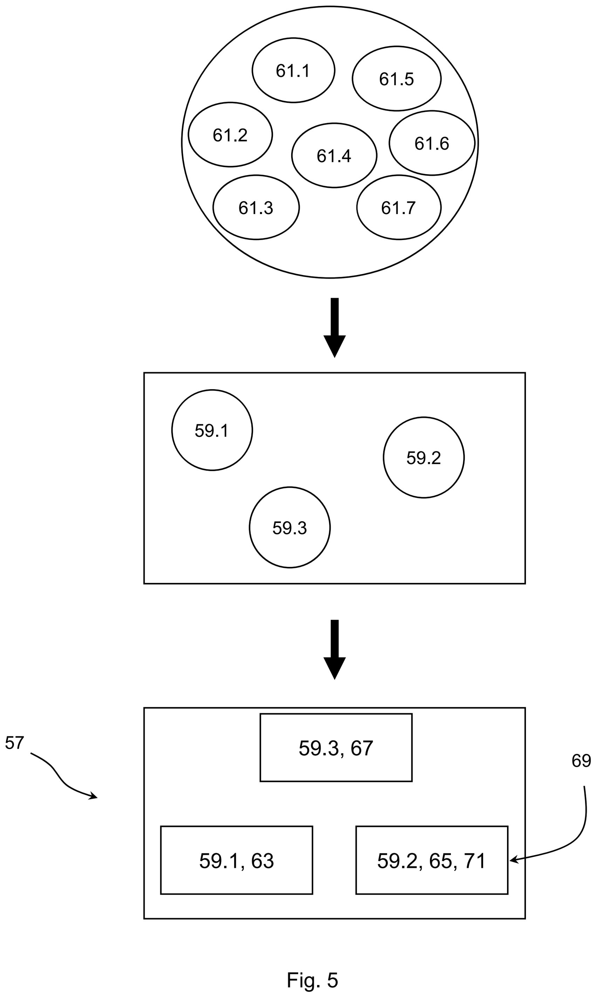

Fig. 5 zeigt beispielhaft eine Parametrisierung 57, die eine Mehrzahl von Parametern 59 umfasst. Im gezeigten Ausführungsbeispiel wurde die Parametrisierung 57 durch Auswahl der Parameter 59 aus einer Mehrzahl vordefinierter Parameter 61 generiert. Beispielsweise kann einem Fahrer des Fahrzeugzugs 200 oder einem extern auf das Zugfahrzeug 300 zugreifenden Nutzer eine Mehrzahl vordefinierter Parameter 61 auf einem Bildschirm angezeigt werden. Der Fahrer/Nutzer kann dann die gewünschte Parametrisierung 57 durch Auswahl der in der Parametrisierung 57 zu berücksichtigenden Parameter 59 generieren. Alternativ oder ergänzend kann aber auch vorgesehen sein, dass die Parameter 59 beim Erstellen der Parametrisierung 57 ganz oder teilweise neu definiert werden.

Fig. 5 illustriert ferner, dass die Parametrisierung 57 auch durch Vornehmen einer Priorisierung der Parameter 59 einstellbar ist. Im gezeigten Ausführungsbeispiel ist ein erster Parameter 59.1 ein Positionsparameter 63, ein zweiter Parameter 59.2 ein Witterungsparameter 65 und ein dritter Parameter 59.3 der Parametrisierung 57 ein Neigungsparameter 67.

Die dynamische Konfigurationsanforderung 55 wird in Abhängigkeit der Parametrisierung 57 bereitgestellt. Beispielsweise kann die Hauptsteuereinheit 336 des Zugfahrzeugs 300 die dynamische Konfigurationsanforderung 55 basierend auf der Parametrisierung 57 bereitstellen. Es soll jedoch verstanden werden, dass auch andere Einheiten, insbesondere Steuereinheiten, die dynamische Konfigurationsanforderung 55 in Abhängigkeit der Parametrisierung bereitstellen können. Das Bereitstellen der dynamischen Konfigurationsanforderung 55 in Abhängigkeit der Parametrisierung 57 erfolgt situationsabhängig bzw. in Abhängigkeit davon, ob einer oder mehrere Parameter 59 erfüllt sind.

Im Ausführungsbeispiel der Fig. 5 fordert die dynamische Konfigurationsanforderung 55 in Abhängigkeit der Parameter 59 der Parametrisierung 57 entweder das Auswählen S2 der ersten Konfiguration 43 oder der zweiten Konfiguration 45 des elektropneumatischen Feststellbremsmoduls 1. Um beispielsweise dann, wenn der Fahrzeugzug 200 auf einer Straße mit großem Gefälle geparkt wird, ein sicheres Abstellen des Fahrzeugzugs 200 zu gewährleisten, kann der Neigungsparameter 67 gegenüber dem Witterungsparameter 65 und dem Positionsparameter 63 priorisiert werden. Dies ist in Fig. 5 durch eine Anordnung des Neigungsparameters 67 über dem Witterungsparameter 65 und dem Positionsparameter 63 illustriert. Auch dann, wenn im Ausführungsbeispiel der Fig. 5 der Positionsparameter 63 und der Witterungsparameter 65 erfüllt sind und demzufolge eigentlich eine dynamische Konfigurationsanforderung 55 bereitgestellt würde, die zur Auswahl der zweiten Konfiguration 45 des elektropneumatischen Feststellbremsmodul 1 führen würde, wird dennoch eine dynamische Konfigurationsanforderung 55 bereitgestellt, die zur Auswahl der ersten Konfiguration 43 führt. Beim Abstellen des Fahrzeugzugs 200 wird dann ein dem Umgebungsdruck entsprechender Anhängersteuerdruck pA am Anhängersteuerventilanschluss 7 ausgesteuert bzw. der Anhängersteuerventilanschluss 7 entlüftet, sodass aufgrund der investierenden Funktion des Anhängersteuerventils 330 ein positiver Anhängerbremsdruck pBA auf der Steuerleitung 334 bereitgestellt wird.

Die Parametrisierung 57 kann ferner durch Einstellen einer Parameterschwelle 69 eines Parameters 67 der Parametrisierung 57 einstellbar sein. Im Ausführungsbeispiel gemäß Fig. 5 ist der Witterungsparameter 65 ein Temperaturparameter 71. Die Parameterschwelle 69 des Temperaturparameters 71 kann beispielsweise eine Temperaturschwelle sein, ab der der Temperaturparameter 71 erfüllt ist. Beispielsweise kann der Temperaturparameter 71 dann erfüllt sein, wenn die Umgebungstemperatur in der Nähe des Fahrzeugzugs 200 den Gefrierpunkt unterschreitet und/oder wenn eine im Abstellzeitraum des Fahrzeugzugs 200 zu erwartende Tiefsttemperatur den Gefrierpunkt unterschreitet. In einem Ausführungsbeispiel, in dem die Parametrisierung 57 ausschließlich den Temperaturparameter 71 umfasst, kann die Konfigurationsanforderung 51 dann beispielsweise zur Auswahl der ersten Konfiguration 43 des elektropneumatischen Feststellbremsmoduls 1 führen (Feststellbremsdruck pP und Anhängersteuerdruck pA im Wesentlichen gleich Umgebungsdruck bzw. entlüftet), sofern die aktuelle Umgebungstemperatur und/oder die zu erwartende Tiefsttemperatur den Gefrierpunkt nicht unterschreitet. Falls die zu erwartende Tiefsttemperatur und/oder die aktuelle Umgebungstemperatur den Gefrierpunkt unterschreitet, kann die dynamische Konfigurationsanforderung 55 hingegen zur Auswahl der zweiten Konfiguration 45 des elektropneumatischen Feststellbremsmoduls 1 führen. Der eine Parameterschwelle 69 bildende Temperaturschwellwert kann angepasst werden, um die Parametrisierung 57 einzustellen. Beispielsweise kann die Parameterschwelle 69 des Temperaturparameters 71 so eingestellt werden, dass bereits bei einer Temperatur von 4 °C zwischen der ersten Konfiguration 43 und der zweiten Konfiguration 45 des elektropneumatischen Feststellbremsmoduls 1 gewechselt wird (bzw. eine entsprechende dynamische Konfigurationsanforderung 55 bereitgestellt wird).

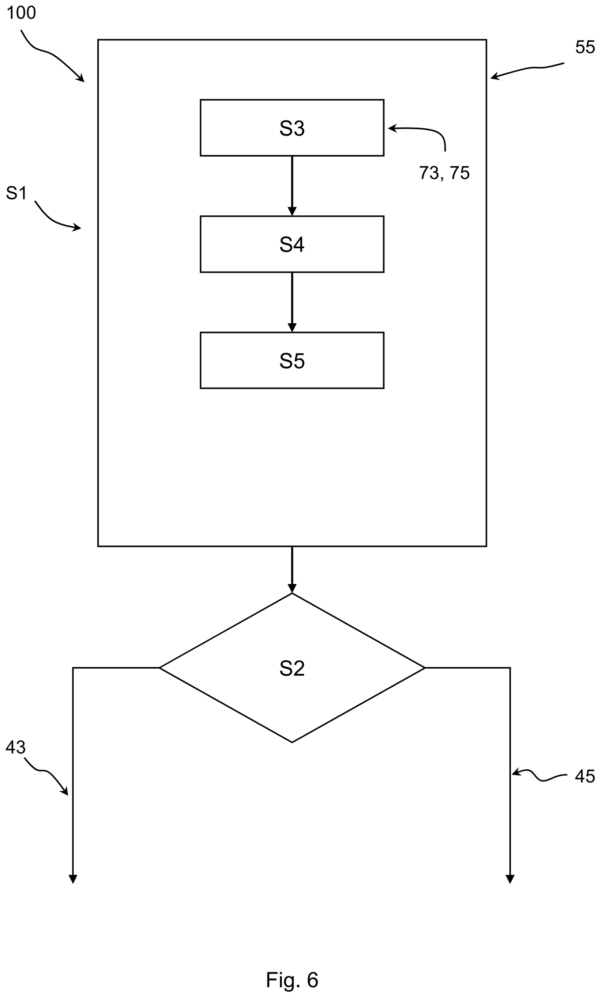

Wenn die Parametrisierung 57 einen Witterungsparameter 65 aufweist (vgl. Fig. 6), dann umfasst das Verfahren 100 vorzugsweise ein Ermitteln S3 einer Witterungsbedingung 73 in der Umgebung des Fahrzeugzugs 200 unter Verwendung von Witterungsinformationen 75. Die Witterungsinformationen 75 können unter Verwendung eines Witterungssensors 340 des Zugfahrzeugs 200 erfasst werden. Alternativ oder ergänzend, können die Witterungsinformationen 75 auch aus einer Vorhersage abgeleitet werden. Beispielsweise kann die Kommunikationseinheit 338 des Zugfahrzeugs 200 eine Wettervorhersage empfangen und die Hauptsteuereinheit 336 kann daraus Witterungsinformationen 75 ableiten. Anschließend kann ermittelt werden (Schritt Ermitteln S4 in Fig. 6), ob die Witterungsbedingung 73 den Witterungsparameter 65 erfüllt. Die dynamische Konfigurationsanforderung 55 wird dann zumindest teilweise in Abhängigkeit des Witterungsparameters 65 bereitgestellt (Bereitstellen S5). Beispielsweise kann eine dynamische Konfigurationsanforderung 55 bereitgestellt werden, die in der Auswahl der ersten Konfiguration 43 des elektropneumatischen Feststellbremsmoduls 1 resultiert, wenn die Witterungsbedingung 73 starken Schneefall repräsentiert.

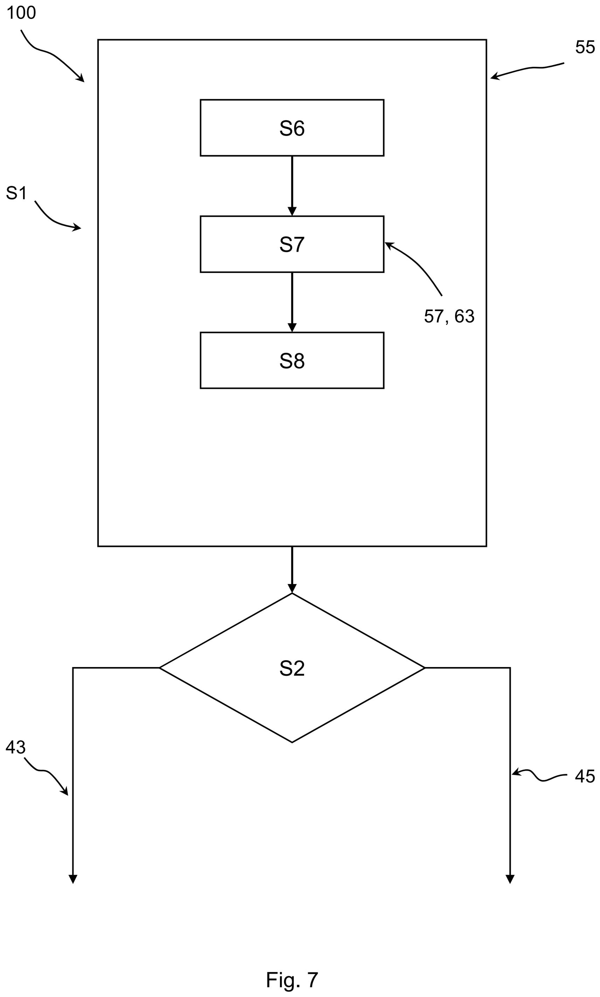

Fig. 7 illustriert ein drittes Ausführungsbeispiel des Verfahrens 100. Zur Vereinfachung umfasst die Parametrisierung 57 in diesem Ausführungsbeispiel nur den Positionsparameter 63. Das Bereitstellen S1 der Konfigurationsanforderung 51 umfasst hier mehrere Teilschritte. In einem ersten Teilschritt S6 wird eine aktuelle Position des Fahrzeugzugs 200 ermittelt. Dies kann unter Verwendung eines GPS-Signals und/oder unter Verwendung von Kartendaten 73 erfolgen. Beispielsweise kann unter Verwendung von GPS-Signalen eine Position des Fahrzeugzugs 200 auf einer durch die Kartendaten 73 repräsentierten Karte verfolgt werden. Es ist jedoch auch möglich, dass die Position des Fahrzeugtyps 200 anhand von Odometriedaten verfolgt und unter Verwendung der Kartendaten 73 ermittelt wird. In einem zweiten Teilschritt S7 wird die ermittelte aktuelle Position des Fahrzeugzugs 200 mit dem Positionsparameter 63 verglichen. In einem dritten Teilschritt S8 wird nun die dynamische Konfigurationsanforderung 55 in Abhängigkeit des Vergleichsergebnisses bereitgestellt. Beispielsweise kann der Positionsparameter 63 so definiert sein, dass eine dynamische Konfigurationsanforderung 55 bereitgestellt wird, die in einer Auswahl der zweiten Konfiguration 45 des elektropneumatischen Feststellbremsmodul 1 resultiert, wenn die ermittelte Position des Fahrzeugzugs 200 nördlich eines durch den Positionsparameter 63 definierten Breitengrades liegt. Vorzugsweise kann der Positionsparameter 63 auch so definiert sein, dass eine dynamische Konfigurationsanforderung 55 bereitgestellt wird, die in einer Auswahl der zweiten Konfiguration 45 des elektropneumatischen Feststellbremsmodul 1 resultiert, wenn sich der Fahrzeugzug 200 in einem skandinavischen Land befindet.

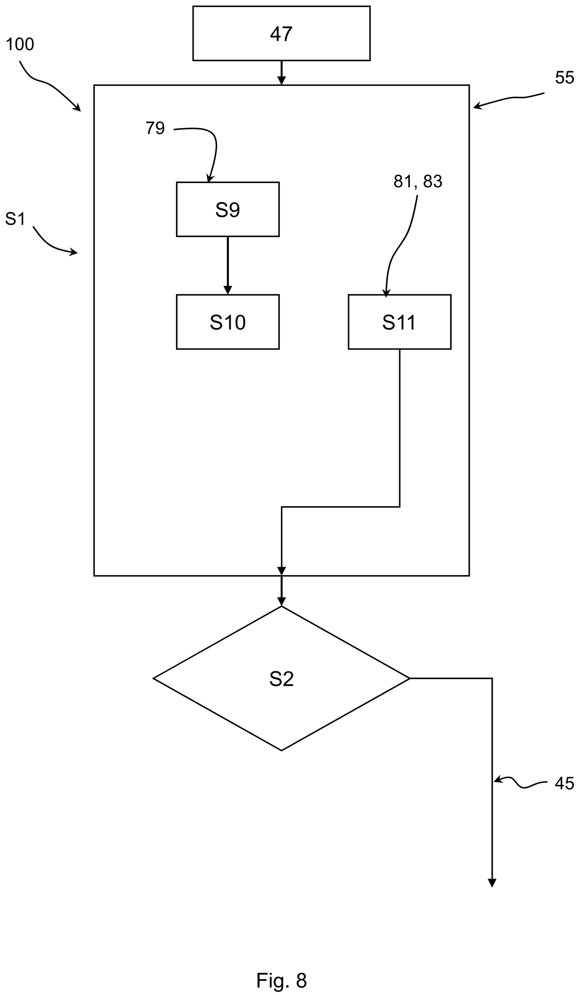

Fig. 8 illustriert ein viertes Ausführungsbeispiel des Verfahrens 100. In diesem Ausführungsbeispiel umfasst die Parametrisierung 57 beispielhaft den Neigungsparameter 67 und einen Anhängerausstattungsparameter 77. Auch hier umfasst das Bereitstellen S1 einer Konfigurationsanforderung 51 mehrere Teilschritte. Das Bereitstellen S1 erfolgt hier in Antwort auf das Bereitstellen einer Feststellbremsanforderung 47. In Antwort auf die Feststellbremsanforderung 47 erfolgt ein Ermitteln S9 einer aktuellen Neigung 79 des Fahrzeugzugs 200 unter Verwendung eines Neigungssensors 342. Anschließend wird Ermittelt (Schritt S10), ob die aktuelle Neigung 79 den Neigungsparameter 67 erfüllt. Im gezeigten Ausführungsbeispiel ist dies der Fall. Wenn die Parametrisierung 57 nur den Neigungsparameter 67 umfassen würde, dann würde vorzugsweise eine dynamische Konfigurationsanforderung 55 bereitgestellt, die in einer Auswahl der ersten Konfiguration 43 des elektropneumatischen Feststellbremsmoduls 1 resultiert. Im Ausführungsbeispiel gemäß Fig. 8 umfasst die Parametrisierung 57 jedoch ferner den Anhängerausstattungsparameter 77. In einem Schritt S11 wird ein Anhängerausstattungsparameter-Ist-Wert 81 ermittelt. Dies erfolgt hier unter Verwendung eines Anhängerausstattungssignals 83 und/oder basierend auf einer Nutzereingabe. Das Anhängerausstattungssignal 83 repräsentiert eine Ausstattung des Anhängerwagens 400. Vorzugsweise umfasst das Anhängerausstattungssignal Informationen darüber, ob der Anhängerwagen 400 eine eigene Anhängerfeststellbremse aufweist oder nicht.

Falls der Anhängerwagen 400 eine eigene Anhängerfeststellbremse aufweist, dann ist es in der Regel nicht notwendig, die regulären Betriebsbremsen des Anhängerwagens 400 zum Bereitstellen einer Feststellbremsfunktion zu nutzen. Das elektropneumatischen Feststellbremsmodul 1 kann dann vorzugsweise immer in dessen zweite Konfiguration 45 geschaltet werden, da eine Feststellbremsfunktion für den Anhängerwagen 400 dann über die Anhängerfeststellbremse bereitstellbar ist.

Wenn der ermittelte Anhängerausstattungsparameter-ist-Wert 81 einen Anhängerwagen 400 mit eigener Anhängerfeststellbremse repräsentiert, dann wird im gezeigten Ausführungsbeispiel eine dynamische Konfigurationsanforderung 55 bereitgestellt, die auch dann in der Auswahl der zweiten Konfiguration 45 des elektropneumatischen Feststellbremsmoduls 1 resultiert, wenn die aktuelle Neigung 79 den Neigungsparameter 67 erfüllt.

### Bezugszeichenliste (Teil der Beschreibung)

- 1: Feststellbremsmodul
- 3: Feststellbremsanschluss
- 5: Vorratsanschluss
- 7: Anhängersteuerventilanschluss
- 9: Druckänderungsventil
- 9.1: Arbeitsanschluss
- 9.2: Versorgungsanschluss
- 9.3: Entlüftungsanschluss
- 11: Halteventil
- 11.1: Einlassanschluss
- 11.2: Auslassanschluss
- 13: erste Leitung
- 15: Versorgungsleitung
- 17: zweite Leitung
- 19: Relaisventil
- 19.1: Steueranschluss
- 19.2: Relaisventil-Versorgungsanschluss
- 19.3: Relaisventil-Arbeitsanschluss
- 19.4: Relaisventil-Entlüftungsanschluss
- 21: erste Schaltstellung des Druckänderungsventils
- 23: zweite Schaltstellung des Druckänderungsventils
- 25: Entlüftungsleitung
- 27: Entlüftung
- 29: dritte Leitung
- 31: zweite Versorgungsleitung
- 33: Ansteuerventil
- 33.1: Ansteuerventil-Eingangsanschluss
- 33.2: Ansteuerventil-Eingangsanschluss
- 33.3: Ansteuerventil-Arbeitsanschluss
- 35: erste Schaltstellung des Ansteuerventils
- 37: zweite Schaltstellung des Ansteuerventils
- 39: vierte Leitung
- 40: dritte Versorgungsleitung
- 41: elektropneumatische Ventileinheit
- 43: erste Konfiguration
- 45: zweite Konfiguration
- 47: Feststellbremsanforderung
- 49: Signalleitung
- 51: Konfigurationsanforderung
- 53: statische Konfigurationsanforderung
- 55: dynamische Konfigurationsanforderung
- 57: Parametrisierung
- 59: Parameter
- 61: vordefinierte Parameter
- 63: Positionsparameter
- 65: Witterungsparameter
- 67: Neigungsparameter
- 69: Parameterschwelle
- 71: Temperaturparameter
- 73: Witterungsbedingung
- 75: Witterungsinformationen
- 77: Anhängerausstattungsparameter
- 79: aktuelle Neigung
- 81: Anhängerausstattungsparameter-Ist-Wert
- 200: Fahrzeugzug
- 300: Zugfahrzeug
- 302: Bremssystem
- 304: Kompressor
- 306: Druckluftvorrat
- 308: Druckluftvorrat
- 310: Betriebsbremskreis
- 312: Feststellbremskreis
- 314: Entlüftung
- 316: Bremszylinder
- 318: Bremszylinder
- 320: Federspeicherbremszylinder
- 322: Betriebsbremsmodul
- 324: Betriebsbremsleitungen
- 326: Betriebsbremsteil
- 328: Federspeicherteil
- 330: Anhängersteuerventil
- 332: Versorgungsleitung
- 334: Steuerleitung
- 336: Hauptsteuereinheit
- 338: Kommunikationseinheit
- 340: Witterungssensor
- 342: Neigungssensors
- 400: Anhängerwagen
- 402: Anhängerbremse
- 404: Anhängerbremsmodul
- 406: Anhängerbremszylinder
- ECU: elektronische Steuereinheit
- pA: Anhängersteuerdruck
- pBA: Anhängerbremsdruck
- pB1: erster Bremsdruck
- pP: Feststellbremsdruck
- pS: Steuerdruck
- pV: Vorratsdruck

## Patentansprüche

1. Verfahren (100) zum Bereitstellen einer Feststellbremsfunktion für einen Fahrzeugzug (200) mit einem Zugfahrzeug (300) und einem Anhängerwagen (400) mittels eines elektropneumatischen Feststellbremsmoduls (1), das einen Vorratsanschluss (5) zum Empfangen von Vorratsdruck (pV), einen Feststellbremsanschluss (3), einen Anhängersteuerventilanschluss (7), eine elektropneumatische Ventileinheit (41) und eine elektronische Steuereinheit (ECU) zum Steuern der elektropneumatischen Ventileinheit (41) aufweist,
wobei das elektropneumatische Feststellbremsmodul (1) durch Schalten der elektropneumatischen Ventileinheit (41) zwischen einer ersten Konfiguration (43), in dem bei Vorliegen einer Feststellbremsanforderung (47) am Feststellbremsanschluss (3) ein Feststellbremsdruck (pP) und am Anhängersteuerventilanschluss (7) ein zum Feststellbremsdruck (pP) im Wesentlichen identischer Anhängersteuerdruck (pA) ausgesteuert wird, und einer zweiten Konfiguration (45), in dem bei Vorliegen einer Feststellbremsanforderung (47) am Feststellbremsanschluss (3) ein Feststellbremsdruck (pP) ausgesteuert und am Anhängersteuerventilanschluss (7) der Vorratsdruck (pV) bereitgestellt wird, bistabil umschaltbar ist,
das Verfahren aufweisend die Schritte:
- Bereitstellen (S1) einer Konfigurationsanforderung (51);
- Auswählen (S2) einer Konfiguration des elektropneumatischen Feststellbremsmoduls (1) aus der ersten Konfiguration (43) und der zweiten Konfiguration (45) durch die elektronische Steuereinheit (ECU) des Feststellbremsmoduls (1) basierend auf der Konfigurationsanforderung (51).

2. Verfahren (100) nach Anspruch 1, wobei die Konfigurationsanforderung (51)
eine statische Konfigurationsanforderung (53), die unabhängig von einem Fahrzeugzustand des Fahrzeugzugs (200) und/oder unabhängig von Umgebungsbedingungen bereitgestellt wird, und/oder
eine dynamische Konfigurationsanforderung (55), die in Abhängigkeit einer zumindest einen Parameter (59) aufweisenden Parametrisierung (57), bereitgestellt wird, umfasst.

3. Verfahren nach Anspruch 2, wobei bei Vorliegen einer statischen Konfigurationsanforderung (53) und einer dynamischen Konfigurationsanforderung (55) die statische Konfigurationsanforderung (53) Vorrang vor der dynamischen Konfigurationsanforderung (55) hat und/oder wobei die dynamische Konfigurationsanforderung (55) nur bei Fehlen einer statischen Konfigurationsanforderung (53) bereitgestellt wird.

4. Verfahren nach Anspruch 2 oder 3, wobei die dynamische Konfigurationsanforderung (55) von einer Steuereinheit (336) des Zugfahrzeugs (300) bereitgestellt wird, die vorzugsweise über eine Signalleitung (49), insbesondere einen Fahrzeugbus, mit der elektronischen Steuereinheit (ECU) des elektropneumatischen Feststellbremsmoduls (1) verbunden ist.

5. Verfahren (100) nach einem der Ansprüche 2 bis 4, wobei die Parametrisierung (57) durch Auswählen zumindest eines Parameters (59) aus einer Mehrzahl vordefinierter Parameter (61) einstellbar ist.

6. Verfahren (100) nach einem der Ansprüche 2 bis 5, wobei die Parametrisierung (57) zumindest zwei Parameter (61) umfasst, und wobei die Parametrisierung (57) durch Vornehmen einer Priorisierung der Parameter (59) einstellbar ist.

7. Verfahren (100) nach einem der Ansprüche 2 bis 6, wobei die Parametrisierung (57) durch Einstellen einer Parameterschwelle (69) zumindest eines Parameters (59) der Parametrisierung (57) einstellbar ist.

8. Verfahren (100) nach einem der Ansprüche 2 bis 7, wobei die Parametrisierung (57) zumindest einen Positionsparameter (63) umfasst, wobei das Verfahren (100) ferner aufweist:
- Ermitteln einer aktuellen Position des Fahrzeugzugs (200) unter Verwendung eines GPS-Signals und/oder basierend auf Kartendaten (73);
- Vergleichen der aktuellen Position mit dem Positionsparameter (63), und
- Bereitstellen der dynamischen Konfigurationsanforderung (55) zumindest teilweise in Abhängigkeit eines Ergebnisses des Vergleichs der aktuellen Position mit dem Positionsparameter (63).

9. Verfahren (100) nach einem der Ansprüche 2 bis 8, wobei die Parametrisierung (57) einen Witterungsparameter (65) umfasst, wobei das Verfahren (100) ferner aufweist:
- Ermitteln einer Witterungsbedingung (73) in der Umgebung des Fahrzeugzugs (200) unter Verwendung von Witterungsinformationen (75), die unter Verwendung eines Witterungssensors (340) des Zugfahrzeugs (300) ermittelt, aus einer Vorhersage abgeleitet und/oder von einer drahtlosen Kommunikationseinheit (338) des Fahrzeugzugs (200) empfangen werden,
- Ermitteln, ob die Witterungsbedingung (73) den Witterungsparameter (65) erfüllt, und
- Bereitstellen der dynamischen Konfigurationsanforderung (55) zumindest teilweise in Abhängigkeit des Witterungsparameters (65), falls die Witterungsbedingung (73) den Witterungsparameter (65) erfüllt.

10. Verfahren (100) nach Anspruch 9, wobei der Witterungsparameter (65) ein Temperaturparameter (71) und die Witterungsbedingung (73) eine Umgebungstemperatur ist, wobei die Witterungsbedingung (73) den Witterungsparameter (65) erfüllt, falls die Umgebungstemperatur einen Temperaturschwellwert des Temperaturparameters (71) unterschreitet.

11. Verfahren (100) nach einem der Ansprüche 2 bis 10, wobei die Parametrisierung (57) einen Neigungsparameter (67) umfasst, wobei das Verfahren (100) ferner aufweist:
- Ermitteln (S9) einer aktuellen Neigung (79) des Fahrzeugzugs (200) unter Verwendung eines Neigungssensors des Fahrzeugzugs (200),
- Ermitteln (S10), ob die aktuelle Neigung (79) den Neigungsparameter (67) erfüllt, und
- Bereitstellen der dynamischen Konfigurationsanforderung (55) zumindest teilweise in Abhängigkeit des Neigungsparameters (67), falls die aktuelle Neigung den Neigungsparameter (67) erfüllt,
wobei die aktuelle Neigung (79) den Neigungsparameter (67) vorzugsweise dann erfüllt, wenn die aktuelle Neigung (79) einen Neigungsschwellwert des Neigungsparameters (67) überschreitet.

12. Verfahren (100) nach einem der Ansprüche 2 bis 11, wobei die Parametrisierung (57) einen Anhängerausstattungsparameter (77) umfasst, wobei das Verfahren (100) umfasst:
- Ermitteln eines Anhängerausstattungsparameter-Ist-Wertes (81) basierend auf einem Anhängerausstattungssignal und/oder basierend auf einer Nutzereingabe,
- Auswählen der zweiten Konfiguration (45) des elektropneumatischen Feststellbremsmoduls (1), falls der Anhängerausstattungsparameter-Ist-Wert (81) einen Anhängerwagen (400) mit eigener Anhängerfeststellbremse repräsentiert.

13. Verfahren (100) nach einem der Ansprüche 1 bis 12, wobei das Bereitstellen (S1) einer Konfigurationsanforderung (51) durch eine Kommunikationseinheit (338) des Fahrzeugzugs (200) erfolgt, die dazu ausgebildet ist, Anforderungssignale von fahrzeugexternen Kommunikationseinheiten zu erhalten.

14. Elektropneumatisches Feststellbremsmodul (1) für ein elektronisch steuerbares pneumatisches Bremssystem (302) für einen Fahrzeugzug (200) mit einem Zugfahrzeug (300) und einem Anhängerwagen (400), insbesondere zum Durchführen des Verfahrens (100) nach einem der Ansprüche 1 bis 13,
wobei das elektropneumatische Feststellbremsmodul (1) einen Vorratsanschluss (5) zum Empfangen von Vorratsdruck (pV), einen Feststellbremsanschluss (3), einen Anhängersteuerventilanschluss (7), eine elektropneumatische Ventileinheit (41) und eine elektronische Steuereinheit (ECU) aufweist,
wobei das elektropneumatische Feststellbremsmodul (1) zwischen einer ersten Konfiguration (43), in dem bei Vorliegen einer Feststellbremsanforderung (47) am Feststellbremsanschluss (3) ein Feststellbremsdruck (pP) und am Anhängersteuerventilanschluss (7) ein zum Feststellbremsdruck (pP) im Wesentlichen identischer Anhängersteuerdruck (pA) ausgesteuert wird, und einer zweiten Konfiguration (45), in dem bei Vorliegen einer Feststellbremsanforderung (47) am Feststellbremsanschluss (3) ein Feststellbremsdruck (pP) ausgesteuert und am Anhängersteuerventilanschluss (7) der Vorratsdruck (pV) bereitgestellt wird, bistabil umschaltbar ist, und
wobei die elektronische Steuereinheit (ECU) dazu ausgebildet ist, eine Konfigurationsanforderung (51) zu empfangen und basierend auf der Konfigurationsanforderung (51) zwischen der ersten Konfiguration (43) und der zweiten Konfiguration (45) zu schalten.

15. Elektropneumatisches Bremssystem (302) für ein Zugfahrzeug (300) umfassend ein elektropneumatisches Feststellbremsmodul (1) nach Anspruch 14.
